# EUROPEAN PATENT SPECIFICATION

(11) **EP 0 443 822 B1**
(45) Date of publication and mention of the grant of the patent: **27.12.1995**
(21) Application number: 91301325.6
(22) Date of filing: 20.02.1991
(51) Int. Cl.: G11B 7/095

(54) **Optical disk inclination detection device**
Vorrichtung zur Feststellung der Neigung einer optischen Platte
Dispositif de détection d'inclination de disque optique

(30) Priority: 22.02.1990 JP 43636/90; 22.03.1990 JP 75253/90; 30.12.1990 JP 416864/90
(43) Date of publication of application: 28.08.1991
(73) Proprietor: VICTOR COMPANY OF JAPAN, LTD., Yokohama-Shi, Kanagawa-Ken (JP)
(72) Inventor: Sato, Senji, Zama-Shi, Kanagawa-Ken (JP)
(74) Representative: Crawford, Andrew Birkby

(56) References cited:
- EP-A- 0 313 818
- GB-A- 2 109 150
- PATENT ABSTRACTS OF JAPAN vol. 11, no. 308 (P-624)(2755) 8 October 1987 & JP-A-62 099 924

## Description

### BACKGROUND OF THE INVENTION

The present invention relates to an optical pickup for performing the recording and reproduction of information with respect to an optical disk such as a CD (compact disc) and the like, and more particularly, to a detection device performs the detection of the inclination of an optical head with respect to an optical disk for adjusting the position of the optical head.

In optical disk players, the central optical axis of an objective lens prepared in an optical head should be set perpendicular with respect to an optical disk in order that a light beam irradiates perpendicularly upon the optical disk. However, when there is a warp in the optical disk, the relationship between the two is no longer perpendicular and this presents a large obstacle to the recording and reproduction of information.

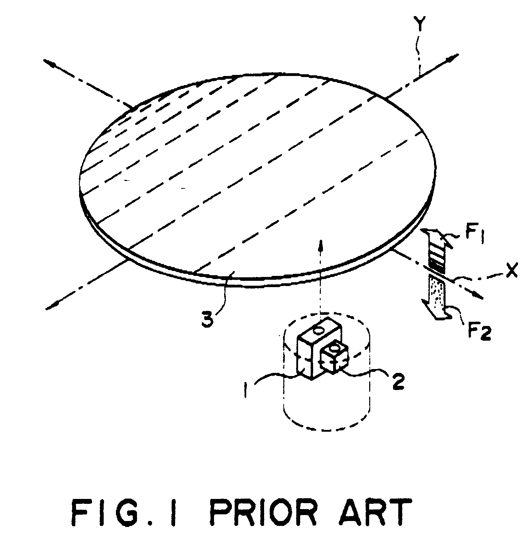

However, with optical disk players such as laser disk players that use disks having diameters of 20 cm or more, then as shown in FIG. 1 for example, an inclination sensor 2 of an optical head 1 is provided to perform adjustment of the inclination with respect to the disk warp. This inclination sensor 2 is inclined along with the optical head 1.

In this conventional technique, the inclination in the direction of the radius of the optical disk 3 (the direction of the arrows F₁, F₂) is detected by the inclination sensor 2 and the results of this detection are used as the basis for the adjustment of the inclination of the optical head 1. By this, the beam of the optical head 1 is irradiated perpendicularly with respect to the optical disk 3.

However, there are following problems in the conventional technique as has described above. More specifically, when the apparatus is manufactured, the inclination sensor itself and the optical head both have to be adjusted to the same inclination and when the demand of adjustment accuracy is increased, there are the associated problems of an increase in the number of adjustment processes and an increase in the adjustment cost. In addition, the inclination sensor 2 is provided separately to the optical head 1 and so there is the problem of the optical head 1 becoming large as a whole.

Furthermore, the inclination adjustment is performed only for the direction of a specific radius (the X direction) of the optical disk 3 and is not performed in the direction perpendicular to the direction of the radius (the Y direction). Because of this, the inclination in the Y direction caused by the mechanical dimension difference when the optical head is running from the inside to the outside prevents the favorable recording and reproduction of information.

In the light of these problems described above there has been proposed a prior art technology for the adjustment of the inclination of an optical disk without the use of the inclination sensor described above.

FIG. 2 shows an inclination adjustment apparatus disclosed in Japanese Patent Application Laid-Open Publication No. 99924-1987. In the same figure, each of the output sides of the light-receiving elements 5 and 6 divided into two in the direction of the radius of the optical disk, are connected to each of the input sides of the high-pass filters 7 and 8. These high-pass filters 7 and 8 are both connected to the input side of the adder 9, and the output side of the adder 9 is connected to the input side of a comparison means 11 via an envelope detection means 10. To this comparison means is connected the output side of the vibration signal generation mans 12. The output side of the comparison means 11 is connected to the input side of a tilt control means 13, and the output side of the vibration signal generation means 12 is connected to the input side of the tilting means 14.

In this conventional art, the tracking and the recording and reproduction of information with respect to the optical disk are all performed by the single-beam method that uses one beam and so the output of the vibration signal generation means 12 is used as the basis for the tilting means 14 to forcedly tilt the optical pick-up. The outputs of the light-receiving elements 5 and 6 are inputted to the envelope detection means 10 in which the envelope of reproduced signals is detected.

This envelope varies its level in accordance with the relative angle between the optical disk and the optical pick-up, and is compared with the vibration signal in the comparison means 11. The results of this comparison represents a relative inclination between the optical disk and the optical head. Thus, the tilt control means 13 performs the adjustment of the inclination of the optical pick-up.

However, with this convention technology as described above, it is necessary to provide an inclination adjustment configuration that wobbles the entire optical pick-up, and the space for the placement of the pick-up portion becomes large. Accordingly, it is difficult to reduce the size of the disk drive apparatus used for disks of 12 cm or less and this makes its practical application difficult.

European Patent 0,313,818 discloses a technique for following the tracks on an optical disk. This involves the superimposition of a small radial oscillation on the optical pick-up, at a frequency which is high relative to the rotational frequency. This oscillation causes a change in the magnitude of the jitter component of the output at the same frequency. Whether the oscillation on the output signal and the oscillation signal are in phase or in antiphase, depends on which side of the track the head is located; an oscillation on the output signal of twice the oscillation frequency occurring when the pick-up is very close to the centre of the track.

This technique is useful for aligning the optical head, this alignment perhaps being accomplished by inclination of the head, but does not allow the irradiation of the disk to be kept at all time substantially perpendicular to its surface.

### SUMMARY OF THE INVENTION

In the light of this, the present invention has as an object the provision of an inclination detection method and apparatus for such, for performing the detection of the inclination of an optical head so that is is possible to favorably and accurately detect the inclination without the use of an inclination sensor, and also the provision of an improved optical disk support apparatus.

Furthermore, another object of the present invention is to provide an optical pick-up inclination detection apparatus that can perform the detection of the inclination using a simple configuration.

In order to achieve the objectives described above, the system and method of the present invention has the configuration described below.

According to the present invention a device is provided for the detection of relative inclination of an optical disk that records information and an optical head that reproduces said information recorded by the irradiation of a light beam to this disk, comprising:
an inclination adjustment means that shifts the relative inclination between said disk and head by applying a forced inclination in alternately positive and negative directions with respect to either of said optical disk and said optical head;
a signal change detection means that detects the change of an output signal of an optical head generated when a relative inclination is forcedly changed by said inclination shift means;
a disk vibration signal generation means which uses the focus drive signal to generate a signal synchronised with the oscillation of the disk;
characterised by comprising phase synchronisation detection means that detects the relative inclination between said disk and head on the basis of the cycle of forced inclination detected by said disk vibration signal generating means and the change in signals detected by said signal change detection means.

An object of the present invention is to provide an optical head inclination detection apparatus that performs the detection of an inclination with respect to an optical disk of an optical head that performs the recording and reproduction of information through the irradiation of a light beam to an optical disk, and that forcedly applies to the optical disk an inclination that changes in the positive and negative direction with respect of said optical head at a fixed cycle, and that comprises a vibration detection means that detects a change in a signal output from an optical head at this time, a cycle detection means that detects a cycle of said forced inclination, and an inclination detections means that detects an inclination of said optical head from changes in signals detected by said vibration detection means.

According to the first aspect of the system described above for the present invention, said vibration detection means is configured so as to detect changes in signals by the envelope detect wave with respect to output signals of an optical head.

Furthermore, another aspect is the provision of an object lens drive means that drives an object lens of an optical head so that the direction of radial transition is the rotational cycle of the optical disk and so that it changes between the eccentric direction of the information tracks, and the direction opposite.

A second aspect is a disk support apparatus that supports and optical disk with respect to an axis of rotation of a rotation means, and which is configured so that when an optical disk is rotating, the inclination changes in the positive and negative directions with respect to the optical head and at a constant cycle.

A third aspect is an optical head inclination detection apparatus that irradiates light beams to an optical disk by an objective optical lens system and that performs the recording and reproduction of information with respect to the optical disk, and that is provided with a shift means that shifts said objective optical system relatively from the center of the light beam to the peripheral region, a signal change detection means that detects changes in signals from an optical head when such a shift was performed, and an inclination detection means that uses the shift cycle by said shift means and signal changes detected by the signal change detection means as the basis for the detection of the relative inclination of said optical head and an optical disk.

The following is a description of the operation of the optical disk inclination detection method and system having the configuration described above.

A predetermined optical inclination is forcedly and alternately applied to an optical disk in the positive and negative directions. This application of the inclination is for example, performed by a method whereby the flat optical disk is given an inclination or a method where the optical disk itself is supported. When this forced inclination is applied to an optical disk, changes occur in the optical head detection signals. The inclination of the optical head is detected using the cycle of the forced inclination from the signal changes.

In addition, the light beam in the peripheral region of the irradiated light beam shifts go as to irradiate with respect to the object optical system of the optical pickup. When this is done, aberration causes the optical irradiation to be performed in the same manner to the optical disk as when the optical pickup itself shifted. The relative inclination between the optical pickup and the optical disk is detected from the changes in the pickup output signals when the objective optical system shifts.

As has been described above, the optical head inclination detection method, apparatus and disk support apparatus according to the present invention forcedly applies an inclination to the optical disk and also uses signal changes caused by this to perform optical head inclination detection and so it is possible to have the effect of performing favorably and accurate inclination detection without the use of an inclination sensor.

Furthermore, since a change in pickup output signals produced when said objective optical system is shifted from the center of said light beam to a peripheral region is used to detect the inclination, there is also the effect that it is possible to easily performs inclination detection using a simple configuration.

### BRIEF DESCRIPTION OF THE DRAWINGS

In the appended drawings,
FIG. 1 is an outline perspective view showing a configuration of a conventional optical disk inclination system of a type using an inclination sensor;

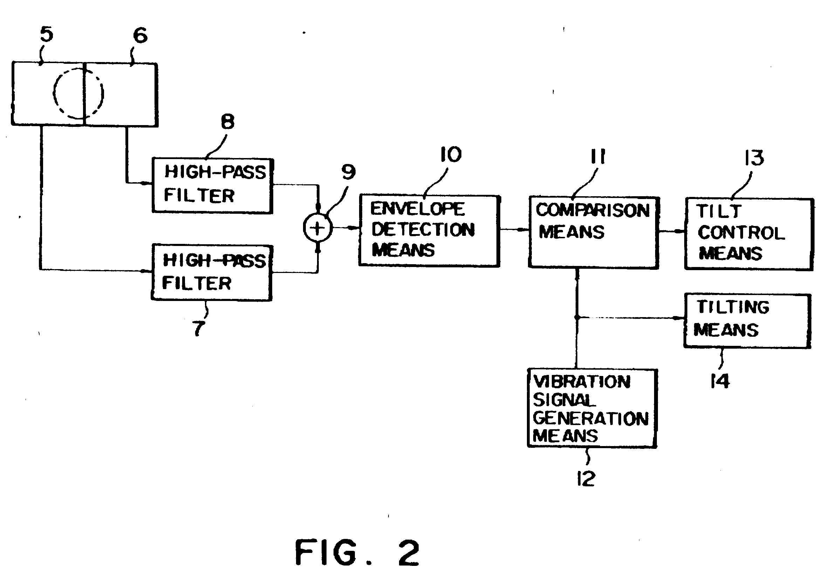

FIG. 2 is a block diagram showing a conventional detection system of a type that detects the inclination of an optical disk through the detection of signals;
FIG. 3 is a block diagram that shows the circuit configuration of an optical disk inclination detection system according to a first embodiment of the present invention;
FIG. 4 is an outline perspective view showing the operation of an optical head inclination adjustment configuration in the system of the first embodiment;
FIG. 5A and FIG. 5B are respectively an outline perspective view and a side view showing the relationships between an optical head and an optical disk in the system of the first embodiment;
FIG. 6A through FIG. 6D are outline perspective views that show the relationship between the angle and the rotation of an optical disk in the system of the first embodiment;
FIG. 7 is a graph showing the motion characteristics of a detection system of the first embodiment;
FIG. 8 is a graph that shows the changes in the amount of jitter generated by the inclination of a disk in the detection system of the first embodiment, with respect to the Y-angle inclination angle and the X-direction inclination angle;
FIG. 9 is a graph that shows the relationship between the rotation of the optical disk and the change in the jitter, in the detection system of the first embodiment;
FIG. 10A and FIG. 10B are respectively an outline perspective view and a side view showing the inclination adjustment configuration in an optical disk inclination detection system according to a second embodiment of the present invention;
FIG. 11A and FIG. 11B are respectively a perspective view and a sectional view showing the optical disk inclination status in an inclination detection system according to a third embodiment of the present invention;
FIG. 12 is a block diagram showing the circuit configuration of an optical disk inclination detection system according to a fourth embodiment of the present invention,
FIG. 13 is a configuration view showing a specific arrangement of an optical disk inclination detection system according to a fifth embodiment of the present invention;
FIG. 14 is a view describing the aberration of a light beam of an optical pickup used in the system of the fifth embodiment;
FIG. 15 is a view describing general wave-surface aberration;
FIG. 16 is a graph showing the characteristics of signal change when the objective lens of the optical pickup in the optical pickup of the system of the fifth embodiment is shifted;
FIG. 17 is a block diagram showing the configuration of a signal change detection circuit in the system of the fifth embodiment;
FIG. 18 is a time chart showing the inclination detection operation of the system of the fifth embodiment;
FIG. 19 is a block diagram showing the configuration of a signal change detection circuit of an optical disk inclination detection system according to a sixth embodiment of the present invention;
FIG. 20 is a block diagram showing the circuit configuration of an optical disk inclination detection system according to a seventh embodiment of the present invention;
FIG. 21 is a waveform diagram showing the change characteristics of a reproduced signal for the case when the objective lens in the system of the seventh embodiment has been shifted; and
FIG. 22 is a waveform diagram showing the detection signals for the X-inclination angle and the Y-inclination angle, for describing the operation of the system of the seventh embodiment.

### DETAILED DESCRIPTION OF THE PREFERRED EMBODIMENTS

The following is a description of the preferred embodiments of the optical head inclination detection method and apparatus, and the disk support apparatus according to the present invention, with reference to the appended drawings.

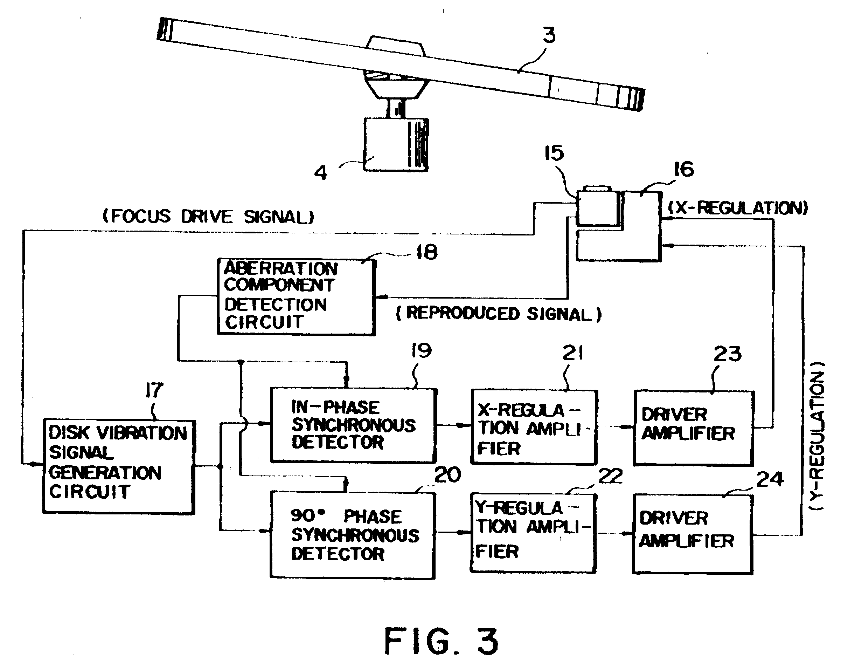

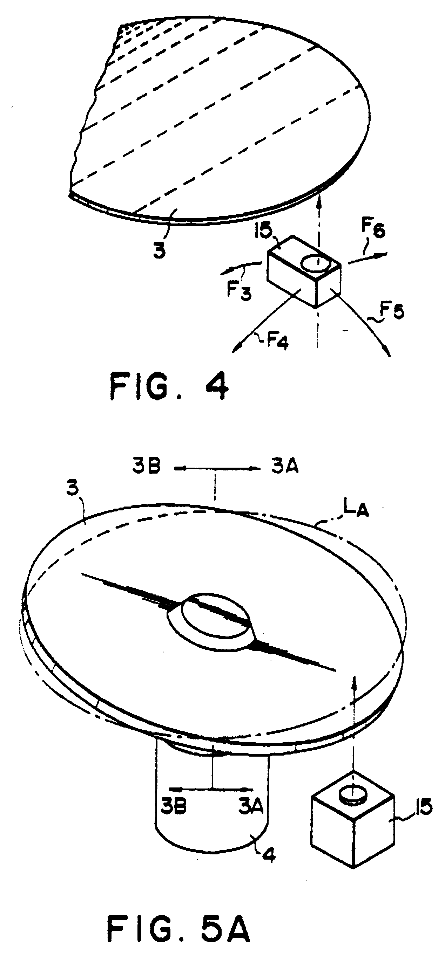

The description will begin with the first embodiment, with reference to FIG. 3 through FIG. 9. FIG. 3 shows the configuration of the major portions of a first embodiment. In FIG. 3, an optical head 15 that performs either the recording or the reproduction of information with respect to an optical disk 3 has its inclination in the X and the Y directions adjusted by an inclination adjustment mechanism 16. These inclination adjustment directions are the directions indicated by the arrows F₃ through F₆ shown in FIG. 4. The directions indicated by the arrows F₃ and F₅ correspond to the radial direction of the radius of the optical disk 3 are in the X direction (radial inclination) and the arrows F₄ and F₆ that correspond to the tangential direction are in the Y direction (tangential inclination).

The focus drive signal for the optical head 15 is connected to the input side of the disk vibration signal generation circuit and the reproduced signal of the optical head 15 which is connected to the input side of the aberration component detection circuit 18. Then, each of the output sides of the disk vibration signal generation circuit 17 and the aberration component detection circuit 18 are each connected to the input sides of the in-phase synchronous detector 19 and 90° phase synchronous detector 20.

Then, each of the output sides of the in-phase synchronous detector 19 and 90° phase synchronous detector 20 are connected to the input side of the inclination adjustment mechanism 16 via the X and Y direction adjustment amplifiers 21 and 22 and the drive amplifiers 23 and 24. The rotation of the optical disk 3 is performed by a spindle motor 4.

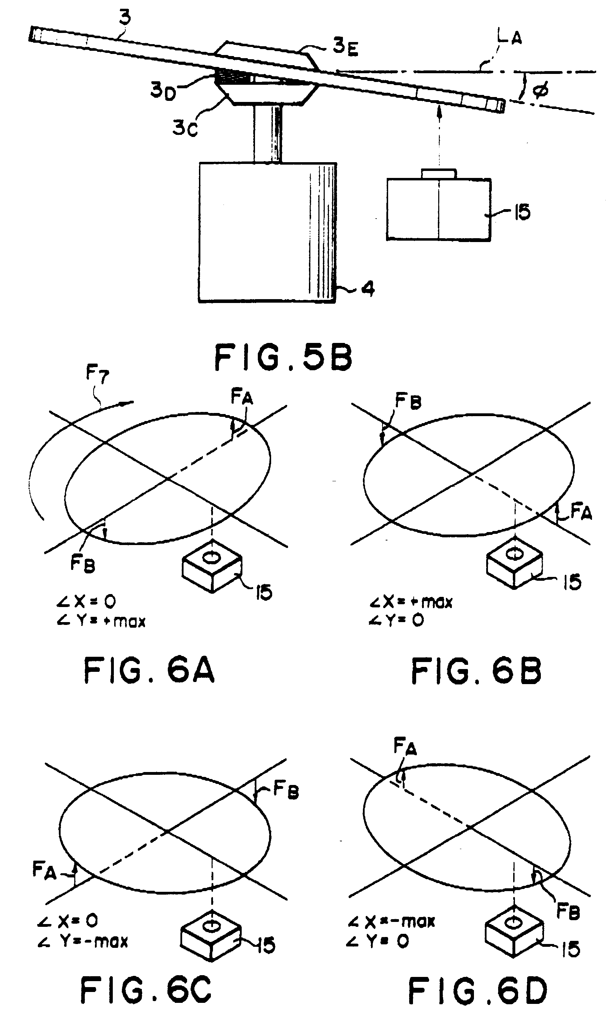

Of these parts, the optical disk 3 is arranged beforehand so that it is given a predetermined inclination as shown in FIG. 5A and FIG. 5B. Moreover, FIG. 5B is the side view of the entire apparatus which is shown in FIG. 5A. In these figures, the optical disk 3 is held so as to be at an inclination φ from the status where there is no inclination as shown by the line L_{A}. More specifically, the portion of the right half 3A is inclined downwards from the normal position, and the portion of the left half 3B is inclined upwards from the normal position. As shown in FIG. 5B, these inclinations formed by the insertion of an inclination piece 3D between the optical disk 3 and the turntable 3C disposed approximately horizontally. Moreover, the optical disk 3 is pressed by a disk presser 3E to the turntable 3C and is urged and supported.

When such an optical disk 3 is rotated, the inclination change with respect to the optical head 15 becomes as shown in FIG. 6A through FIG. 6D. The following description assumes an initial status as shown in FIG. 6A. More specifically, there is no inclination in the X direction but the Y direction has the maximum amount of inclination in the positive direction. In addition, the gap between the optical head 15 and the optical disk 3 is at its largest.

Furthermore, when the optical disk 3 rotates one quarter of a turn in the direction shown by the arrow F₇, the status becomes that as shown in FIG. 6C. In this case, there is no inclination in the X direction but the inclination in the Y direction is maximum for the negative direction.

Then, when the optical disk 3 rotates a further one quarter of a turn in the direction of the arrow F₇, the status becomes that as shown in FIG. 6D. In this case, there in no inclination in the Y direction but that in the X direction is maximum for the negative direction. In addition, the gap between the optical head 15 and the optical disk 3 is at its narrowest. This status is shown in FIG. 5A and FIG. 5B.

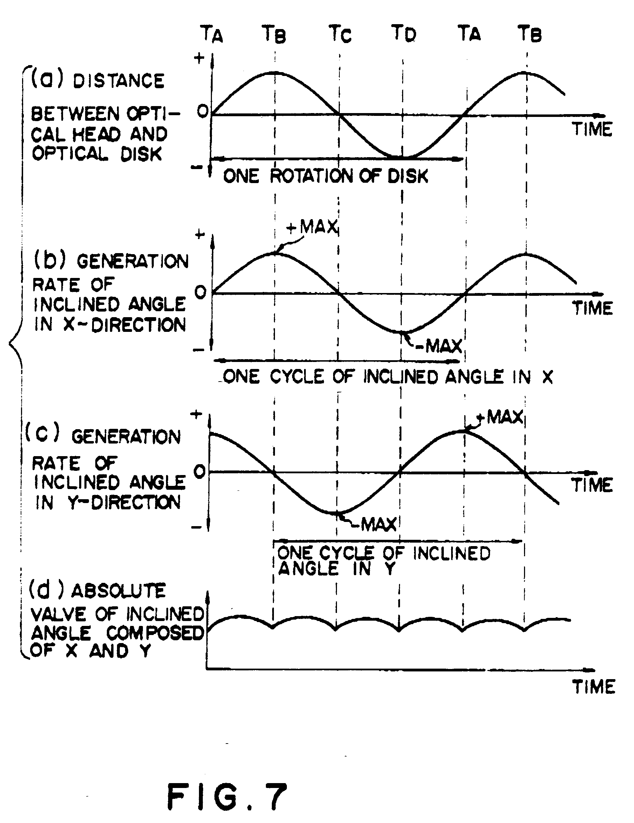

FIG. 7 is a graph showing the change for the period between time T_{A} and T_{D}, of the inclination with respect to the optical head 15. The distance between the optical disk 3 and the optical head 15 changes as shown in FIG. 7(a) for the process from FIG. 6A to FIG. 6D. Then, when the inclination angle in the X direction, of the optical disk 3 with respect to the optical head 15 is considered, it is positive maximum in the status shown in FIG. 6B, and negative maximum for the status shown in FIG. 6D and becomes an shown in FIG. 7(b). In the same manner, the angle of inclination in the Y direction becomes as shown in FIG. 7(c). Accordingly, the change in the absolute value of the X-Y composite angle of inclination for one rotation of the optical disk 3 becomes as shown in FIG. 7(d).

Then, returning to FIG. 3, tee disk vibration signal generation circuit 17 is for the generation and output of signals that are in phase with the inclination status of the optical disk 3 and so the focus drive signals of the optical head 15 are used. The DC component of these focus drive signals indicates the position of the actuator (not indicated in the figure) that follows the rotation of the optical disk 3 and so it is possible to know the status of the inclination of the optical disk 3. By this, the vibration signals corresponding to the change in the X and Y direction inclination as shown in FIG. 7(b) and FIG. 7(c) are output to the in-phase synchronous detector 19 and 90° phase synchronous detector 20.

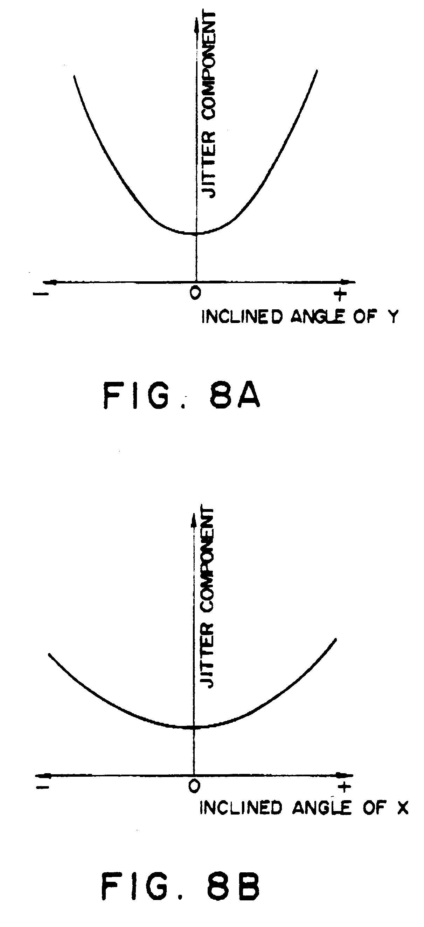

Then, the aberration component detection circuit 18 detects the change in the reproduced signal generated by the optical aberration as a result of the inclination of the optical disk 3. The signal change due to aberration that is generated as a result of disk inclination includes modulation deterioration, jitter deterioration and crosstalk deterioration but in this embodiment, the change in the jitter amount is detected. Jitter and the disk inclination angle have for example, a relationship proportional to the square as shown in FIGS. 8A and 8B. FIG. 8A shows she change in the jitter with respect to the angle of inclination in the Y direction and FIG. 8B shows the change in the jitter with respect to the angle of inclination in the X direction.

The in-phase synchronous detector 19 and the 90° phase synchronous detector 20 detect synchronous components in the input jitter corresponding to in-phase and 90° phase respectively thus the X and Y direction components for the inclination angle change are separated. As shown in FIG. 7(d), the change In the angle of inclination of the optical disk 3 is a composite of the X and Y direction components. Because of this, the change in the detected jitter is also the composite of the X and Y components.

Here, the in-phase synchronous detector 19 performs wave phase detect that is synchronous with the input synchronous signals and detects the X direction component of the inclination signals. On the other hand, the 90° phase synchronous detector 20 performs wave phase detect synchronous with the signals that have been shifted 90° with respect to the input synchronous signals, and detects the Y direction component of the inclination signals. Moreover, the provision of a phase difference of 90° is because of the phase difference of 90° in the X and Y inclination angle changes as shown in FIG. 7(b) and (c).

The actuator portion (not indicated in the figure) of the optical head 15 is used as an inclination adjustment mechanism 16 instead of inclining the entire optical head 15.

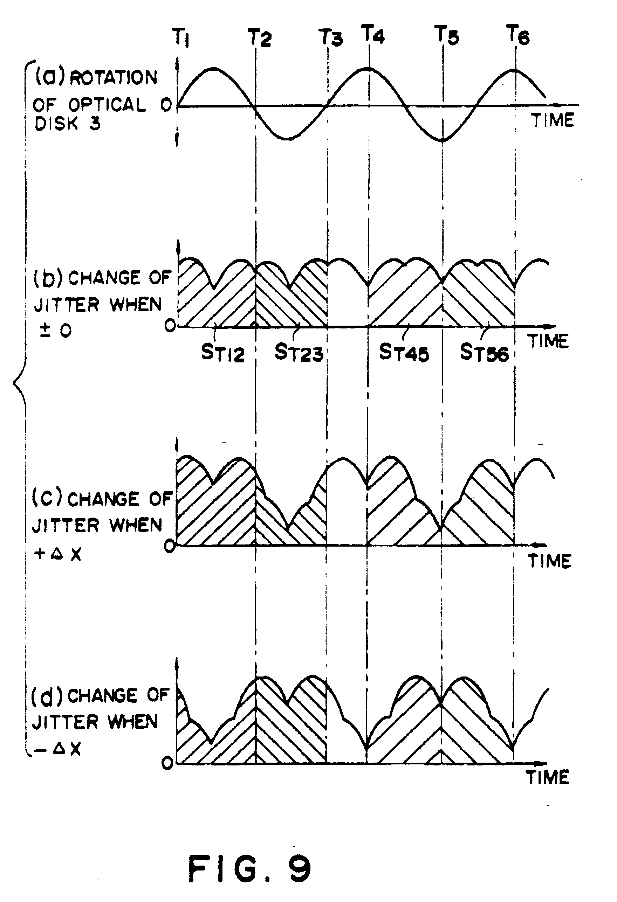

The following is a description of the function of a first embodiment having the configuration described above, with reference to FIG. 9. The optical disk 3 that is placed so as to have an angle of inclination is rotated at a predetermined speed by a spindle motor 4. (Refer to FIG. 9(a).) This optical disk 3 has a beam from the optical head 15 irradiated to it and focus drive signals applied to the optical head 15 from a focus driver (not shown) and reproduced signals are output.

From the input focus drive signals, the disk vibration signal generation circuit 17 generates vibration signals corresponding to the change in the X and Y inclination angles shows in FIG. 7(b) and (c), and supplies them to the in-phase synchronous detector 19 and 90° phase synchronous detector 20. On the other hand, the aberration component detection circuit 18 performs detection of the composite jitter components on the basis of the input reproduced signals and supplies them to the in-phase synchronous detector 19 and the 90° phase synchronous detector 20.

### a. When there is no inclination of the optical head 15

The description will commence from the status when a beam of an optical head 15 is irradiated so as to be substantially perpendicular with respect to a normal optical disk indicated by the line L_{A}, that is, from the status where there is an inclination other than a forced inclination that has been applied to the optical disk 3. In this case, the composite jitter component detected by the aberration component detection circuit 18 is as shown in FIG. 9(b).

First, with respect to the X component, the in-phase synchronous detector 19 performs detection of the composite jitter signal synchronized with the rotation of the optical disk 3 as shown in FIG. 9(a), or rather, the detection of the X component. For example, when the times T1 and T3 in the same figure are considered, the signal ST₁₂ for the period T1T2 and the signal ST₂₃ for the period T2T3 are in agreement. From this, it is known that the optical head 15 is substantially perpendicular in the X direction. Because of this, the adjustment signal is not output by the X regulation amplifier 21, and no adjustment of the inclination of the optical head 15 in the X direction is performed by the inclination adjustment mechanism 16.

Then, when the Y component is considered, the 90° phase synchronous detector 20 performs wave detect of the composite jitter component having a phase difference of 90° with respect to the rotation of the optical disk 3 as shown in FIG. 9(a), or rather, performs detection of the Y component. For example, the signals for the periods T4 and T5 are in agreement with the signals T5 and T6. From this, it is known that the optical head 15 is substantially perpendicular in the Y direction. Because of this, the adjustment signal is not output by the Y regulation amplifier 22, and no adjustment of the inclination of the optical head 15 in the Y direction is performed.

### b. When there is an inclination of the optical head 15 in the +ΔX direction

The following is a description of the case when a beam from an optical head 15 is irradiated at an angle of +ΔX with respect to a normal optical disk indicated by the line L_{A,} In this case, the composite jitter component detected by the aberration component detection circuit 18 is as indicated in FIG. 9(c).

First, considering the X component, the in-phase synchronous T1-T2 detector 19 detects the composite jitter signals that are in phase with the rotation of the optical disk 3. For example, when the times T1 and T3 of the same figure are considered, the signal ST₁₂ for the period T1-T2 and the signal ST₂₃ for the period T2-T3 have a relationship where ST₁₂ > ST₂₃. From this, it is known that the optical head 15 has an inclination of +ΔX in the X direction. Because of this, a corresponding adjustment signal is output by the X regulation amplifier 21 and the inclination adjustment mechanism 16 performs X direction inclination adjustment to compensate for +ΔX. This adjustment is performed so that ST₁₂ = ST₂₃, that so that FIG. 9(c) becomes FIG. 9(b).

Then, when the Y component is considered, the 90° phase synchronous detector 20 performs wave detect of the composite jitter signals that have a phase difference of 90° with respect to the rotation of the optical disk 3. For example, considering the period between times T4 and T6, the signal ST₄₅ for the period T4T5 and the signal ST₅₆ for the period T5T6 are in agreement. From this, it is known that the optical head 15 is substantially perpendicular in the Y direction. Because of this, no adjustment signal is output from the Y regulation amplifier 22 and no adjustment of the inclination of the optical head 15 in the Y direction is performed by the inclination adjustment mechanism 16.

### c. When the optical head 15 is inclined by -ΔX

The following is a description of the case when a beam from an optical head 15 is irradiated at an angle of -ΔX with respect to a normal optical disk indicated by the line L_{A}. In this case, the composite jitter component detected by the aberration component detection circuit 18 is as indicated in FIG. 9(d).

First, considering the X component, the in-phase synchronous detector 19 detects the composite jitter signals that are in phase with the rotation of the optical disk 3. For example, when the times T1 and T3 of the same figure are considered, the signal ST₁₂ for the period T1-T2 and the signal ST₂₃ for the period T2-T3 have a relationship where ST₁₂ < ST₂₃. From this, it is known that the optical head 15 has an inclination of -ΔX in the X direction. Because of this, a corresponding adjustment signal is output by the X regulation amplifier 21 and the inclination adjustment mechanism 16 performs X direction inclination adjustment to compensate for -ΔX. This adjustment is performed so that ST₁₂ = ST₂₃, that so that FIG. 9(d) becomes FIG. 9(b).

Then, when the Y component is considered, the 90° phase synchronous detector 20 performs wave detect of the composite jitter signals that have a phase difference of 90° with respect to the rotation of the optical disk 3. For example, considering the period between times T4 and T6, the signal ST₄₅ for the period T4T5 and the signal ST₅₆ for the period T5T6 are in agreement. From this, it is known that the optical head 15 is substantially perpendicular in the Y direction. Because of this, no adjustment signal is output from the Y regulation amplifier 22 and no adjustment of the inclination of the optical head 15 in the Y direction is performed by the inclination adjustment mechanism 16.

Moreover, the operation is the same for when the optical head 15 is inclined by +ΔY and -ΔY.

The first embodiment of the present invention as has been described above has the following effects.
(1) The disposition of an optical disk so that it is forcedly given an inclination and the synchronous detection of a change in the inclination for the jitter component of a head detect signal generated by the inclination enables the optimum inclination adjustment to be performed by the accurate and favorable detection of the degree of inclination between the disk and the head.
   In addition, detection can be performed using a marketed optical disk and does not require special items. Disks themselves generally have complex warping but if a forced inclination is applied at a constant cycle and in alternating positive and negative directions, it is possible to detect the inclination of the optical head favorably and without the warping causing any influence.
(2) There is no need to have an inclination angle sensor as there is with the conventional apparatus. In addition, it is possible to use a method to determine the absolute head angle in the manufacturing process even in the case of a reproduction apparatus having an inclination angle sensor.
(3) It is possible to perform favorable adjustment even with respect to inclinations that are generated by the movement of an optical head from the outer periphery of an optical disk to the inner periphery of an optical disk and therefore prevent deterioration of the characteristics caused by mechanical dimensional differences when there is this movement from the outside to the inside.
(4) The inclination can be favorably and accurately detected and the inclination given to an optical disk can be continuously adjusted in real time while recording or reproduction operation is being performed.
(5) Furthermore, it is possible to have automated inclination adjustment and therefore improve the productivity.

### <Second embodiment>

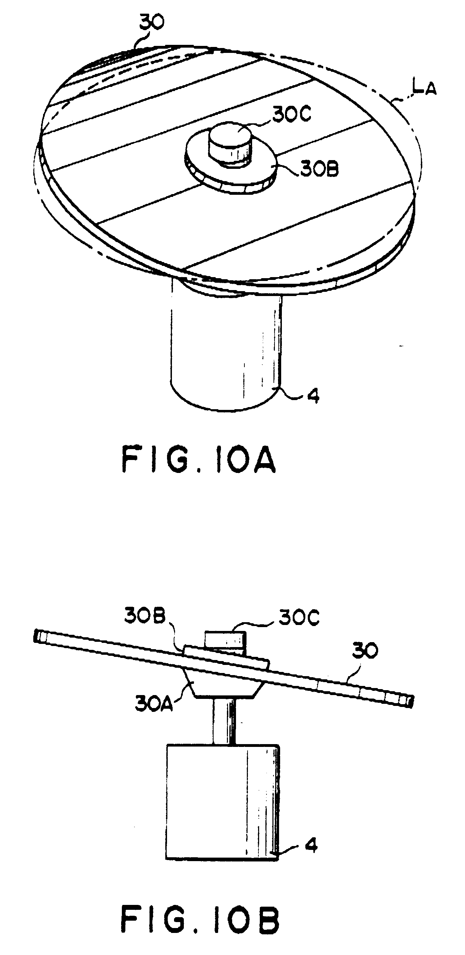

The following is a description of a second embodiment of the present invention, with reference to FIG. 10A and 10B. Moreover, those portions of the configuration that are the same as corresponding portions of the first embodiment are indicated with corresponding numerals. FIG. 10A shows an entire disk arrangement and FIG. 10B shows a side view.

This second embodiment also has an inclination given to the optical disk 30. An inclination piece 3D was used in the first embodiment but an inclined turntable 30A is used in the second embodiment. An optical disk 30 is pressed by a disk presser 30B with respect to the inclined turntable 30A and is fixed by a disk presser screw 30C. The other portions of the embodiment are the same as those for the first embodiment.

### <Third embodiment>

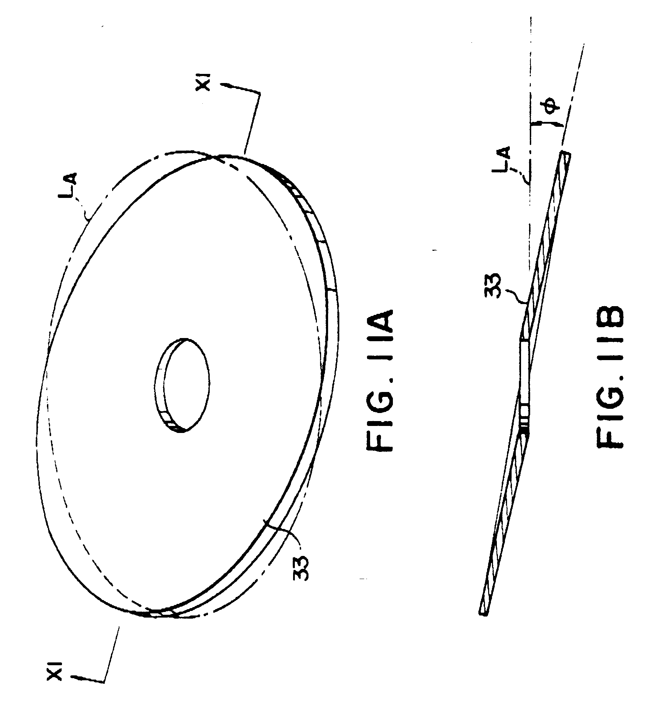

The following is a description of a third embodiment of the present invention, with reference to FIG. 11A and 11B. Moreover, those portions of the configuration that are the same as corresponding portions of the first embodiment are indicated with corresponding numerals. FIG. 11B is a sectional view along the section line XI-XI of FIG. 11A.

In this embodiment, the optical disk 33 itself is formed with an inclination of an angle φ, and the disk placement itself is performed with respect to a turntable (not indicated in the figure) in the same manner. The other portions of the embodiment are the same as for the first embodiment.

### <Fourth embodiment>

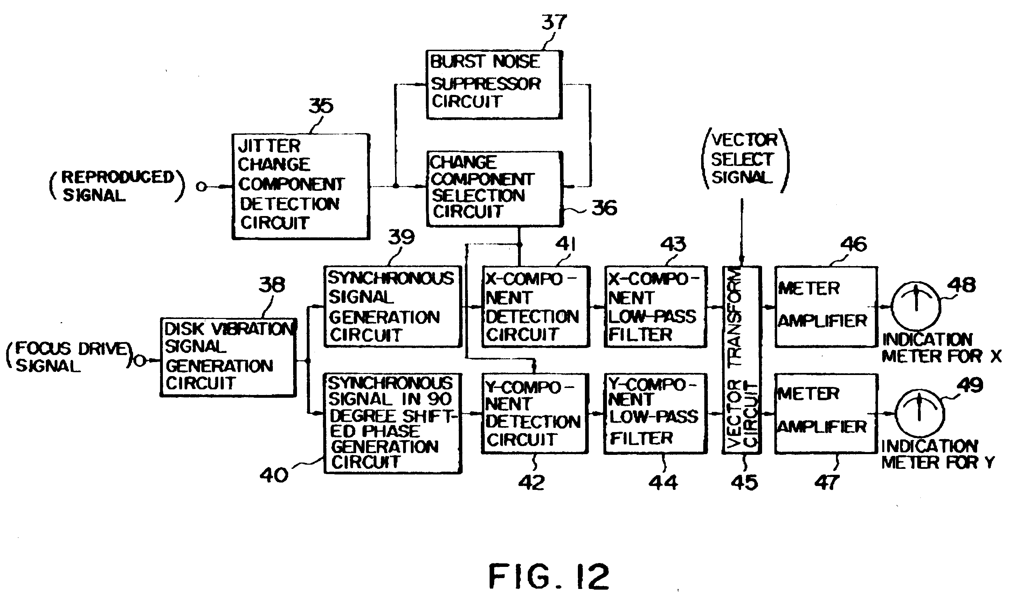

The following is a description of a fourth embodiment of the present invention, with reference to FIG. 12. In the first, second and third embodiments described above, optical head inclination adjustment was performed using an optical disk that had an optical inclination but in this fourth embodiment, the inclination angles detected in the X and Y directions are displayed on a meter so that it is possible to perform inclination angle adjustment at the place of manufacture. In FIG. 12, the reproduced signals output from the optical head 15 are input to a jitter change component detection circuit 35. The output side of this jitter change component detection circuit 35 is connected to the input side of a change component selector circuit 36 and in accordance with necessity, is connected to the input side of a burst noise suppressor circuit 37.

On the other hand, the focus drive signals applied to the optical head 15 are input to a vibration signal generation circuit 38. The output side of this vibration signal generation circuit 38 is connected to a synchronous signal generation circuit 39 and to the input side of a synchronous signal in 90° shifted phase generation circuit 40. Then, the output sides of these synchronous signal generation circuit 39 and synchronous signal in 90° shifted phase generation circuit 40 are respectively connected to the input sides of an X component detection circuit 41 and a Y component detection circuit 42.

In addition, the X component detection circuit 41 and the Y component detection circuit 42 are respectively connected to the output side of the change component selector circuit 36 described above.

Then, each of the output sides of the X component detection circuit 41 and the Y component detection circuit 42 are connected to the input side of the X component low pass filter 43 and the Y component low pass filter 44, and the output sides of these X component low pass filter 43 and the Y component low pass filter 44 are connected respectively to the input side of a vector conversion circuit 45. The output side of this vector conversion circuit 45 is connected to indication meters 46 and 47 via meter amplifiers 46 and 47.

The following is a description of the operation of a fourth embodiment having the configuration described above. Reproduced signals from the optical head 15 are inputted to the jitter change component detection circuit 35 where the jitter change component is detected. The detected signals are input to the change component selector circuit 36 where, in accordance with necessity, they receive noise suppression processing by the change component selector circuit 36. The jitter change components selected from the change component selector circuit 36 are supplied to the X component detection circuit 41 and the Y component detection circuit 42.

On the other hand, the focus drive signals from the optical head 15 are inputted to the vibration signal generation circuit 38 where vibration signals for the optical disk 33 are generated. These vibration signals are inputted to the synchronous signal generation circuit 39 and the synchronous signal in 90° shifted phase generation circuit 40 where synchronization signals for the detection of the X and Y components are generated. (Refer to FIG. 7.) These synchronization signals are supplied to the X component detection circuit 41 and the Y component detection circuit 42.

Then, in the X component detection circuit 41 and the Y component detection circuit 42, each of the input jitter change components and the synchronous signals for detection are used to detect the X and Y change components of the jitter in the same manner as for the first embodiment. After the detected jitter X and Y components have received filtering processing by each of the low pass filters 43 and 44, they are supplied to the vector conversion circuit 45. This vector conversion circuit 45 has the vector select signals input externally and uses them as the basis for performing vector conversion and coordinate conversion. Then, the inclination detection signals that have been converted are each output to the indication meters 48 and 49 where meter indication corresponding to them is performed.

At the place of manufacture, it is then possible to adjust the angle of inclination of the optical head 15 while referring to the meter indications.

### <Fifth embodiment>

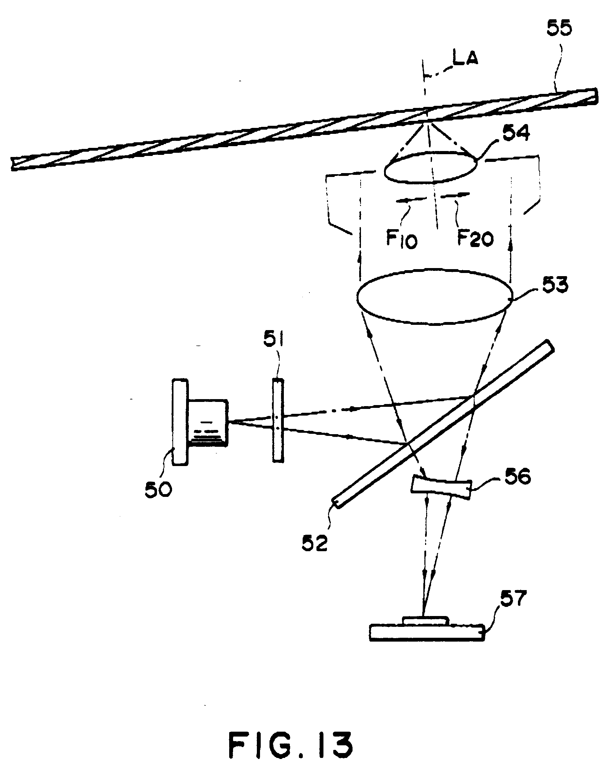

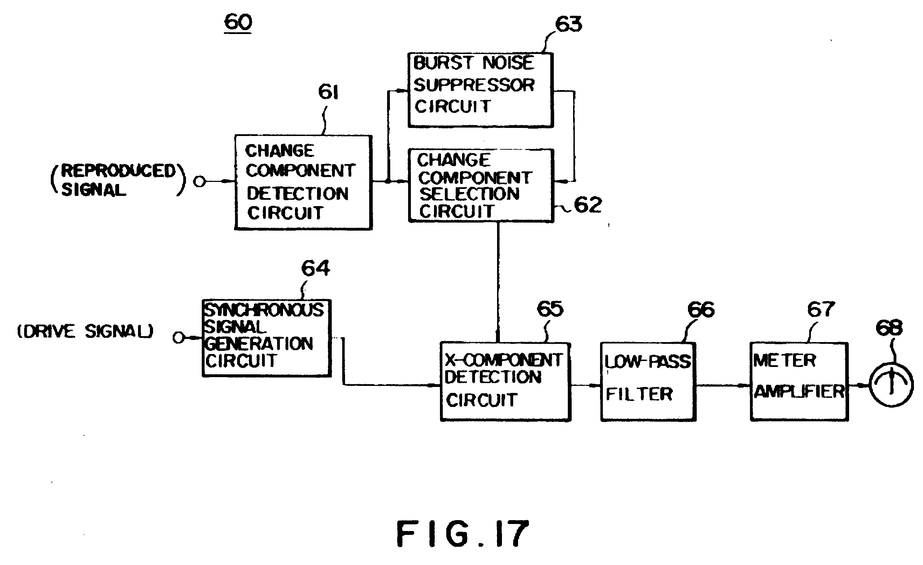

The following is a description of a fifth embodiment of the present invention, with reference to FIG. 13 through FIG. 18. FIG. 13 shows the configuration of an optical pickup according to the fifth embodiment. In this figure, laser light output from a laser oscillator 50 is irradiated to a beam splitter 52 via a diffraction grating 51 where it is reflected to the side of the optical disk 60. The laser light is collimated by a collimating lens 53 and is then irradiated to an object lens 54 where it is focussed and irradiated to the optical disk 55.

On the other hand, the laser light that is reflected by the optical disk 55 passes through the objective lens 54, a collimator lens 53, a beam splitter 52 and a detection lens 56 successively, and is irradiated to a photodetector 57. This performs the recording and reproduction of information with respect to the optical disk 55.

Here, in this embodiment, as shown by the arrow F₁₀ and F₂₀, movement of the objective lens 54 in the region where the light beam exists on the outer side of the optical axis L_{A} is performed so that it is possible to have the same effect as wobbling of the optical pickup.

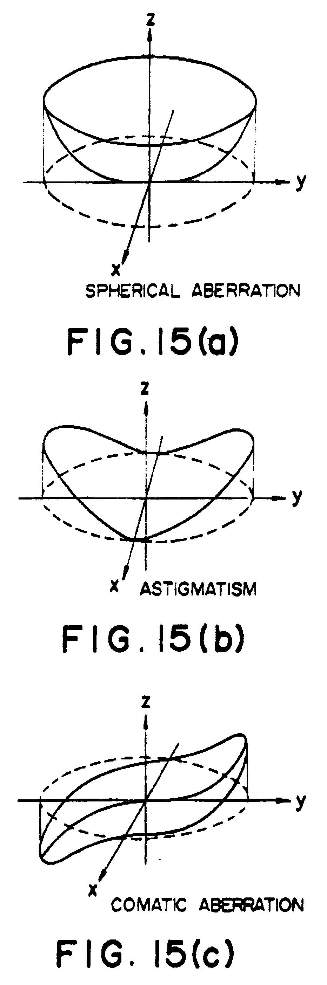

More specifically, the optical characteristics at the time when the objective lens 54 moves in the light beam that is output from the collimating lens 53 are controlled by the optical characteristics of the collimating lens 53. As is well known, lens aberration is as shown in FIG. 15(a) through FIG. 15(c) for example. Moreover, the coordinate axes x, y and z are suitably provided. FIG. 15(a) shows the spherical aberration and FIG. 15(c) shows the astigmatic aberration, while FIG. 15(c) shows the coma aberration.

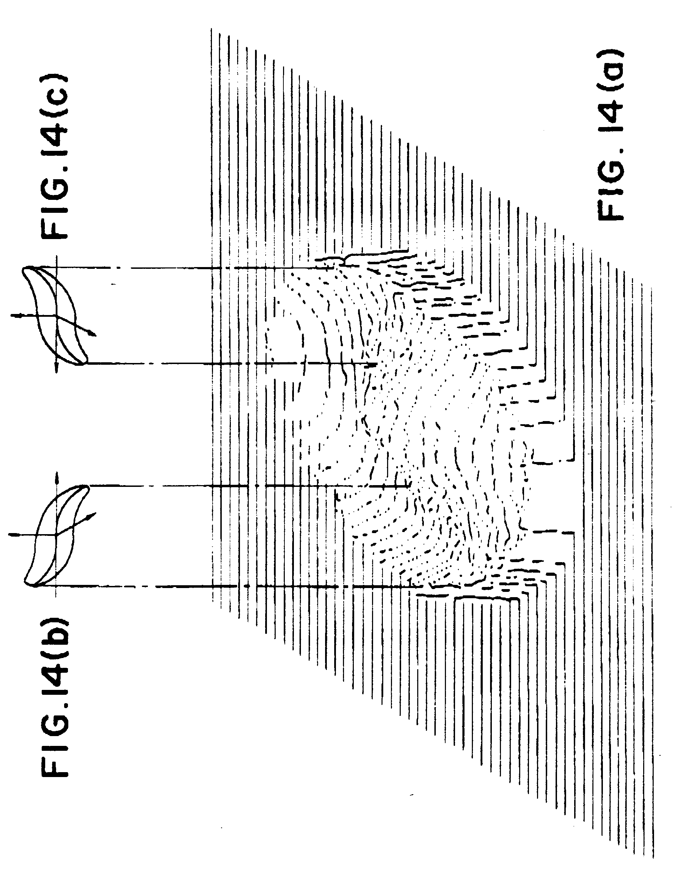

With respect to this, the optical characteristics of the collimating lens 53 described above are as indicated in FIG. 14(a) for example. As is clear from this figure, the light beam has spherical aberration overall and the outer peripheral region has coma aberration. (Refer to FIGS. 14(b) and 14(c).) Accordingly, moving the objective lens 54 irradiates the light of the coma aberration characteristic portion of the outer peripheral region of the light beam, to the objective lens 54.

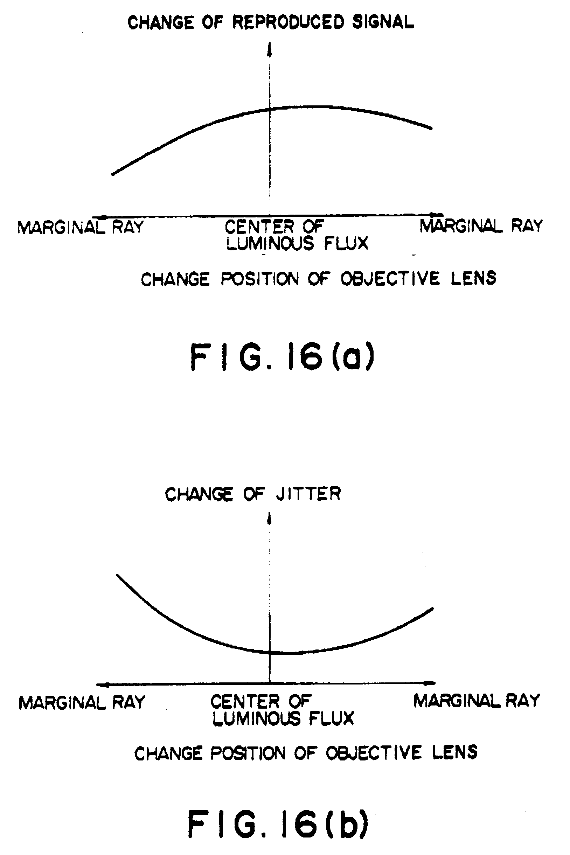

However, the aberration generated when the optical pickup is inclined as described above for the prior art is coma aberration, and is the same as the aberration produced when the objective lens 54 is shifted. Because of this, the influence of coma aberration caused by the forced shifting of the objective lens 54 causes a change in the detection signals and that is the same as when the optical pickup itself has been shifted. FIGS. 16(a) and (b) show one example of such a change in the detection signals, with FIG. 16(a) showing the change in the reproduced signals with respect to the position shift of the objective lens 54 and FIG. 16(b) showing the change in the jitter component.

The following is a description of one example of the configuration of a signal processing circuit 60 of the fifth embodiment. In the figure, the reproduced signals output from the photodetector 57 of an optical pickup are input to a change component detection circuit 61. The output side of this change component detection circuit 61 is connected to the input side of a change component selector circuit 62 and in accordance with necessity, is also connected to the input side of a burst noise suppressor circuit 63.

On the other hand, the drive signals output from the shift drive signal generator (not indicated in the figure) of the objective lens 54 are input to the synchronous signal generation circuit 64. The output side of the synchronous signal generation circuit 64 is connected to the input side of an X component detection circuit 65. Also, the X component detection circuit 65 is also connected to the output side of the change component selector circuit 62 described above.

Then, the output side of the X component detection circuit 65 is connected to the input side of a low-pass filter 66 and the output side of this low-pass filter 66 is connected to an indication meter 68 via a meter amplifier 67.

In this fifth embodiment, the bright level signals in the reproduced signals are used for detecting the change component in the change component detection circuit 61. The reproduced signals have two levels corresponding to the light from teh pit of the disk and to the light from the land of the disk, respectively. Here, the bright level signal is a detection signal by the reflected light in the land portion of the disk where there is no data bit. In addition, the objective lens 54 shifts in the X direction (the direction of radial inclination) and detection of the inclination in the X direction is performed. Moreover, if necessary, the same is also performed in the Y direction (the tangential direction).

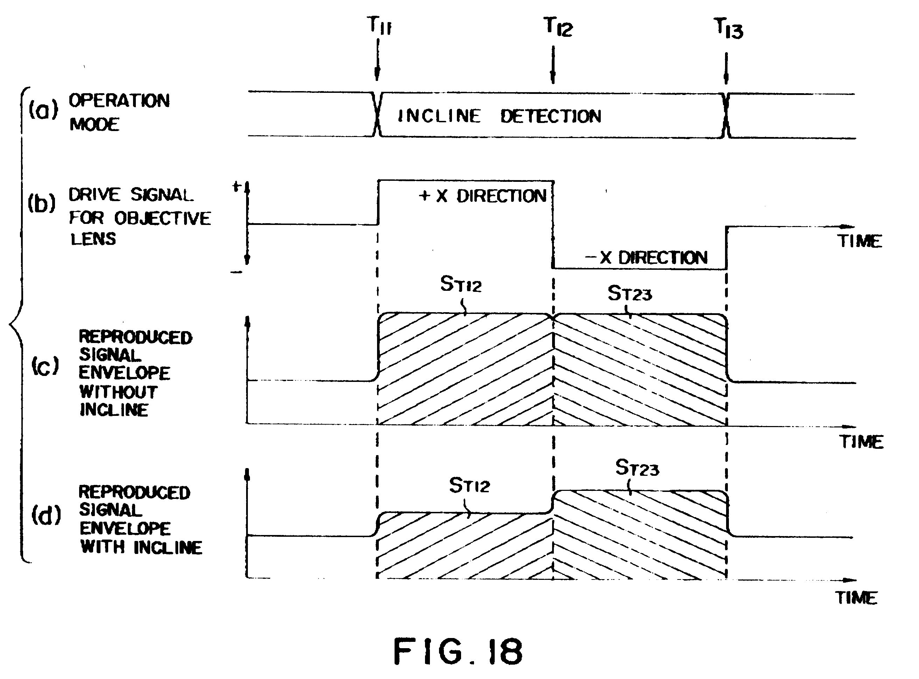

The following is a description of the operation of a fifth embodiment having the configuration described above, and with reference to the time chart shown in FIG. 18. Moreover, the operation described below, is for example, performed in the status where the disk 55 is rotated at a suitable speed without the use of radial servo control.

It is assumed that inclination detection is performed from time T₁₁. (Refer to FIG. 18(a).) The objective lens 54 of the optical pickup is forcedly wobbled in the X direction as described above (see FIG. 18(b)) and the reproduced signals output from the photodetector 57 at this time are input to the change component detection circuit 61 where the detection of the change component is detected. The detected signals are input to the change component selector circuit 62 where they receive noise suppression processing by the burst noise suppressor circuit 63 provided in accordance with necessity. The reproduced change component that is selectively output from the change component selector circuit 62 is supplied to the X component detection circuit 65.

On the other hand, the drive signals (see FIG. 18(b)) output from the shift drive signal generator for the objective lens 54 are input to the synchronous signal generation circuit 64 where synchronization signals for detection of the X component are generated. These synchronization signals are supplied to the X component detection circuit 65. The X component detection circuit 65 detects the X change component amongst the reproduced signal envelope by using the inputted reproduced siganls and the synchronous signals for detection.

### a. When there in no inclination of the optical pickup

The description will commence with the case when the beam of the optical pickup is irradiated substantially perpendicular to the optical disk 55. In this case, the reproduced change component of the reproduced signal envelope detected by the component detection circuit 61 is as shown in FIG. 18(c).

More specifically, the signal integrated value ST₁₂ for the period between the times T₁₁ and T₁₂ when wobbling is forcedly performed for the +X direction of the objective lens 54, and the signal integrated value ST₂₃ for the period between the times T₁₂ and T₁₃ when wobbling is forcedly performed for the -X direction of the objective lens 54 are in agreement. From this, it is known that the optical pickup is substantially perpendicular in the X direction. From this, there is no output of detection signals to the low-pass filter 66.

### b. When there is an inclination of the optical pickup in the +ΔX direction

The following is a description of the case when the beam of the optical pickup is irradiated at a +ΔX inclination other than the forced inclination due to wobbling and with respect to optical disk 55. In this case, the change component of the reproduced signal envleope detected by the change component detection circuit 61 is as shown in FIG. 18(d).

More specifically, the signal integrated value ST₁₂ for when wobbling is forcedly performed for the +X direction of the objective lens 54, and the signal integrated value ST₂₃ for when wobbling is forcedly performed for the -X direction of the objective lens 54 are not in agreement. Because of this, the difference between the two is calculated by the X component detection circuit 65 and output as an X inclination detection signal.

These detection signals are filtered in the low-pass filter 66 and are then output to an indication meter 68 via a meter amplifier 67 and meter display is performed for the X inclination component of the optical pickup.

At the place of manufacture, this meter indicated in referred to while inclination adjustment of the optical pickup is performed. In addition, the results of detection can also be used to perform servo control of the inclination of the optical pickup. Furthermore, it is also possible to perform inclination detection in the same manner for the Y direction.

This fifth embodiment therefore has the following effects.
(1) Even if there is no inclination adjustment mechanism for the optical pickup itself, it is possible to substantially detect the inclination angle and the direction of inclination of the optical pickup by shifting the objective lens. Because of this, there is also the merit of detecting the inclination in the status without manual contact when the assembly of the mechanical portions is completed.
(2) In addition, it is also possible to perform high speed wobbling of the objective lens 54 irrespective of the rotational cycle of the optical disk 55 and therefore enable high speed detection.

### <Sixth embodiment>

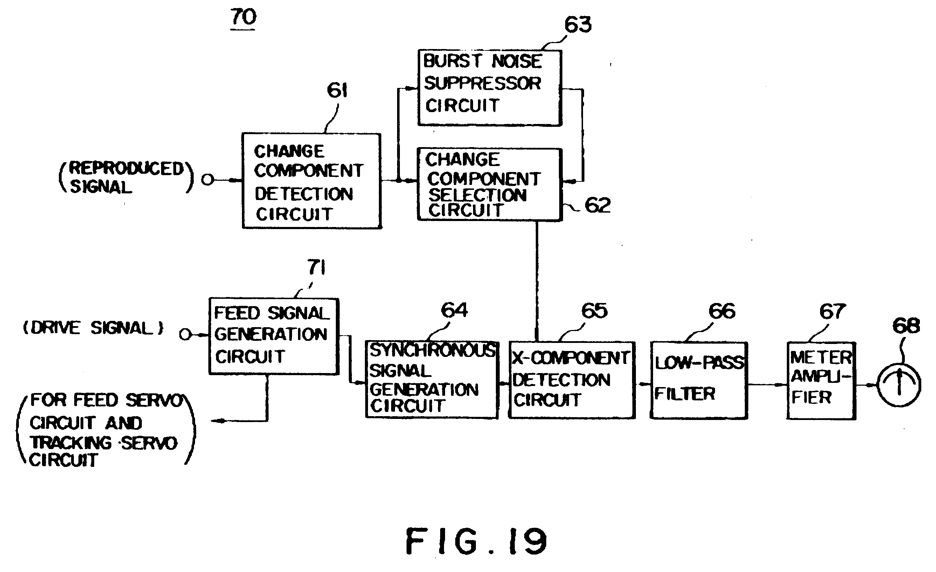

The following is a description of a sixth embodiment of the present invention, with reference to FIG. 19. This sixth embodiment is an embodiment that is effective for the confirmation of the inclination characteristics of disk drive apparatus that are not provided with a production pickup adjustment apparatus having a feed mechanism or with an inclination adjustment apparatus. Moreover, those portions of the configuration that are the same as corresponding portions of the first embodiment are indicated with corresponding numerals.

In FIG. 9, the drive signals for performing the shift of the objective lens 54 (see FIG. 13) are input to a feed signal generation circuit 71 of a signal processing circuit 70. To one of the output sides of the feed signal generation circuit 71 is connected a tracking servo circuit and in accordance with necessity, a feed servo circuit (not indicated in the figure), and to the other of the output sides is connected the input side of the synchronous signal generation circuit 64. The other portions of this configuration are the same as those of the fifth embodiment.

The following is a description of the operation of this sixth embodiment. In this embodiment, the objective lens 54 is fixed and is not shifted by the drive signals. The drive signals are input to the feed signal generation circuit 71 where feed signals are generated.

These feed signals are for example, scattered by the tracking servo circuit of the optical pickup after factory adjustment has been completed, or are scattered by the tracking servo circuit of the disk drive apparatus in the status where assembly is half completed. Furthermore, in addition to being supplied to the tracking servo circuit, the feed signals are supplied to the feed servo circuit in accordance with necessity.

By this, the portion other than the objective lens 54 of the optical pickup is shifted by the feed mechanism in the status where the position of the objective lens 54 is fixed. Because of this, the objective lens 54 has the output light beam of the collimating lens 53 irradiated to the peripheral region. Accordingly, the result is that the operation is the same as that of the fifth embodiment.

### <Seventh embodiment>

The following is a description of a seventh embodiment of the present invention. This seventh embodiment detects the envelope of reproduced signal instead of jitter component as a measure for the inclination. More specifically, an envelope detect wave circuit is used instead of the jitter change component as a measure for the inclination detection circuit 35 in FIG. 12 that shows the fourth embodiment. Moreover, the description of the figure is omitted.

According to this method for the detection of the reproduced in this manner, it is possible to perform detection of the inclination of the optical head even if there in no other servo if the focus servo of the optical beam with respect to the optical disk is in the status of being applied, and therefore it is possible to perform the adjustment of such. There are therefore the following effects.
(1) It is possible to arbitrarily set the rotation speed of the optical disk and so the accuracy of the envelope wave detect is raised if detect is performed at high speed, and the accuracy of inclination angle detection is also raised as a result. Furthermore, it is not necessary for the rotational drive circuit for the spindle motor to have a circuit portion for controlling the linear speed to be constant and so the circuit configuration for the adjustment of the inclination of the optical head is simplified.
(2) In addition, it is not necessary to have radial servo and so it is possible to perform adjustment of the inclination angle of the optical head even in the status where grating adjustment and focussing adjustment of the optical head are not performed. As in the case of the fourth embodiment for when the jitter component of the reproduced signals is detected, it is necessary to perform the adjustment of the optical head in the order of focussing adjustment → grating adjustment → inclination angle adjustment but it is possible to perform these adjustment simultaneously when the method using envelope detection is used.
   Furthermore, it is not necessary to have track following of the optical head and so it is possible to fix the position relationship between the optical disk and the optical head. Because of this, the mechanical structure of the adjustment mechanism for the optical head can be simplified. In addition, the electrical configuration and the mechanical configurations are also simplified since it is also not necessary to have a circuit portion for feed tracking servo.

### <Eighth embodiment>

The following is a description of an eighth embodiment of the present invention, with respect to FIGS. 13, 20 and 21.

In this eighth embodiment, the objective lens of the optical head is also shifted and a forced inclination is applied with respect to the optical disk. The shifting of the objective lens of the optical head is performed by an optical head inclination detection apparatus described for the fifth embodiment and the sixth embodiment. This specification discloses an optical head inclination detection apparatus that detects the inclination from the change in the reproduced signals when the objective lens of the optical head is shifted.

The configuration of the optical head is the same as that of the optical head described for the fifth embodiment and the sixth embodiment and so the description is omitted here. (A detailed description is provided with respect to FIG. 13.)

As shown by the arrows F₁₀ and F₂₀ in FIG. 13, the objective lens 54 performs is shifted to the region where the light beam exists on the outer side of the optical axis L_{A}. By this, an aberration occurs in the same manner as for the wobbling of the optical head disclosed in Japanese Patent Application Laid-Open Publication No. 99924-1987. More specifically, this shift of the objective lens enables a detect signal change to be obtained in the same manner as when the optical head itself is inclined.

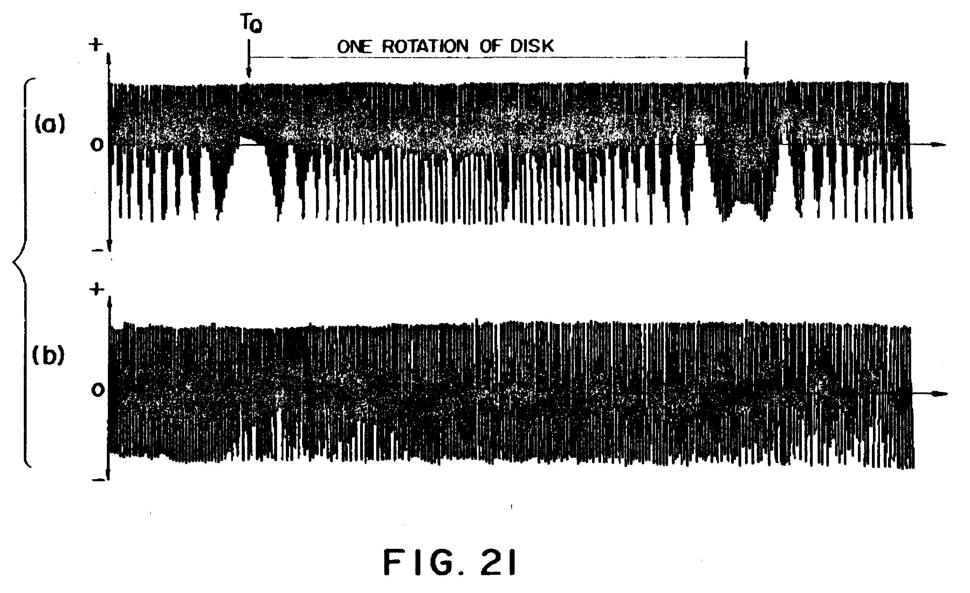

FIG. 21 shows an output example of a reproduced signal envelope from the optical head due to the present and absence of a shift of the objective lens 54 in this manner. First, when there is no shift performed for the objective lens 54, there is the signal waveform shown in FIG. 21(a), and for example, the large drop of the signal amplitude at the position of the time T_{Q} influences the envelope detect wave signal of the reproduced signal envelope. However, when the objective lens 54 is shifted, the signal waveform becomes as shown in FIG. 21(b), and the accuracy of the envelope detect wave is increased so that there is no problem.

In the seventh embodiment, it is not necessary to have a radial servo. However, in this case, if the objective lens is shifted in the same manner as has been described above, it is possible to increase the change component detection accuracy for the reproduced signal of the seventh embodiment, and the vibration resist performance is favorable.

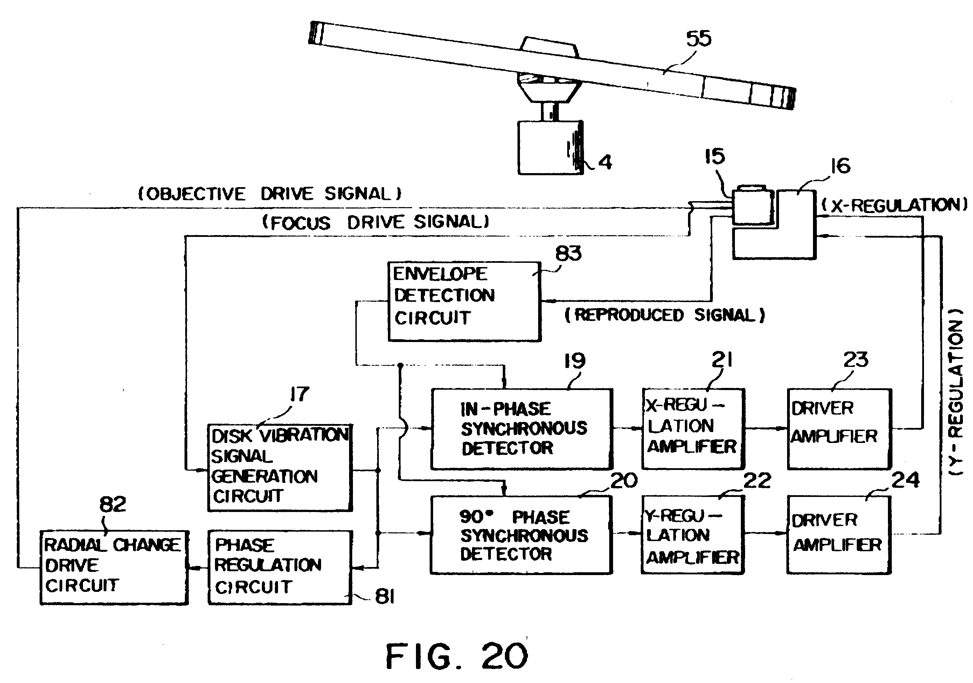

The following is a description of an eighth embodiment of the present invention, with reference to FIG. 20. In FIG. 20, those portions of the configuration that are the same as corresponding portions of the first embodiment are indicated with corresponding numerals. In the figure, the focus drive signals of the optical head 15 are connected to the input side of the disk vibration signal generation circuit 17 and the output side of this disk vibration signal generation circuit 17 is connected to the input sides of the in-phase synchronous detector 19 and the 90° phase synchronous detector 20.

Furthermore, the output side of the disk vibration signal generation circuit 17 is connected to the input side of the phase adjustment circuit 81 and the output side of this phase adjustment circuit 81 is connected to the input side of the radial shift drive circuit 82. Then, the output signals of this radial shift drive circuit 82 are used as drive signals for the objective lens 54 (see FIG. 13) in the optical head, and are input to the optical head 15. In addition, the reproduced signals from the optical head 15 are connected to the input sides of the in-phase synchronous detector 19 and the 90° phase synchronous detector 20. Moreover, the phase adjustment circuit 81 is for performing phase adjustment necessary for the performance of the operations to be described later and so the direction of radial shift of the objective lens 54 becomes the reverse of the eccentric direction of the information tracks of the optical disk 55 and is for raising the information track intersection speed.

The following is a description of the operation of an embodiment having the configuration as described above. The vibration signals are generated by the disk vibration signal generation circuit 17 on the basis of the focus drive signals from the optical head 15. Then, these vibration signals are input to the radial shift drive circuit 82 after phase adjustment by the phase adjustment circuit 81 and the radial direction (X direction) of the objective lens 54 is changed. Because of this, the radial change direction of the objective lens 54 becomes the reverse direction to the eccentric direction of the information tracks of the optical disk 55 and the objective lens 54 and the optical disk 55 are driven synchronously so that the speed of information track intersection is raised.

These reproduced signals from the optical head 15 and which have been driven and shifted are supplied to the envelope detect wave circuit 83 where envelope wave detect is performed. Then, these detect wave signals are used as the basis for the performance of inclination adjustment in the X direction and the Y direction as described for the first embodiment.

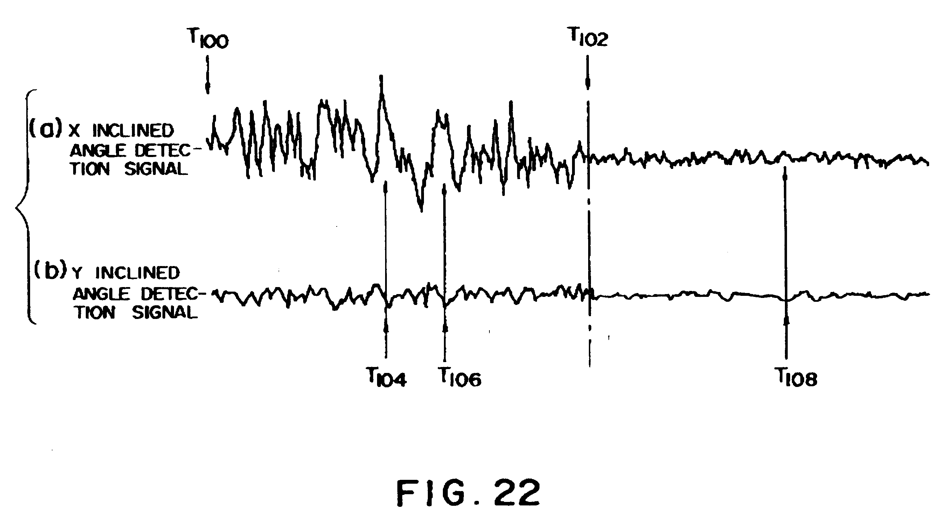

Giving an inclination shift to both the optical disk 55 and the optical head 15 and performing inclination detect by the envelope detect wave has the following advantages.
(1) When there is no shift of the objective lens 54 for the X direction, an amplitude drop is generated for the duration of comparison with the disk rotation period such as the time T_{Q} in FIG. 21 and due to the information track eccentricity and so it is difficult to say that the accuracy of envelope wave detect for the radio frequency signal is sufficiently satisfied. However, if the objective lens 54 is also shifted, then the conditions of the direction of the radial shift of the objective lens 54 in the eccentric direction and the opposite direction and the being in-phase with the rotation of the disk enable a sufficient envelope wave detect accuracy to be obtained because the drop in the amplitude can be significantly reduced.
   Furthermove, it is possible to improve the accuracy of detection in the X direction because of the increase in the amount of inclination in the X direction due to the objective lens being shifted radially under conditions where the aberration component that is the same component as the X direction inclination component generated by the radial shift of the objective lens multiplies the component generated in the X direction of the disk (FIG. 7(b)).
(2) Furthermore, the vibration resist performance can be improved for both the X and the Y directions, because of the following reasons. The drop portion of the reproduced signal amplitude indicated in FIG. 21 is due to the trace of the beam on the mirror surface between information tracks and the large portion of the amplitude is due to the trace of the beam on portion on the surface of the information track. If there is a disk eccentricity, the beam traces the mirror portion between information tracks and so there is an amplitude drop portion.
   However, the pitch between information tracks is for example, a small dimension such as 1.6 »m and because of this, the amplitude drop status shown in FIG. 21(a) occurs not only for the disk eccentricity, but also because of the small dimension such as the clearance between the shaft and the bearings of the spindle motor 4.
   The spindle motor itself is also rotated with a small yet non-cyclic axial eccentricity because of this clearance during rotation. Furthermore, there is also a similar axial eccentricity generated with respect to external vibrations. These also become causes of amplitude drop.
   In addition, when shift of the objective lens 54 is not performed, the objective lens 54 is supported in the status where it is not controlled at the mechanical center in the radial direction. However, the support structure of the objective lens 54 is a structure that is freely movable and so it moves when small mechanical external vibrations are applied. Because of this, the amplitude drop shown in FIG. 21(a) is generated in the same manner.
   However, as shown for the eighth embodiment, the objective lens 54 is shifted and the intersection speed with the information track is raised so that it is possible to have a high vibration resistance with respect to either vibration. FIG. 22 shows the test data for changes in the X and Y direction inclination angle detection signals due to the presence and absence of shift of the objective lens 54. In the figure, time T₁₀₀ and time T₁₀₂ are for the case when an external mechanical vibration is applied without objective lens 54 shift being performed, and time T₁₀₂ and later is for when shift of the objective lens 54 has been performed. Moreover, external mechanical vibration is applied at times T₁₀₄, T₁₀₆ and T₁₀₈. As is shown in this figure, the signal discrepancy is greatly reduced for time T₁₀₂ and later and the vibration resist characteristic can be greatly improved by this eighth embodiment.

### <Other embodiments>

Moreover, the present invention is not limited to the first through eighth embodiments described above, as for example, when the direction of the detected inclination and the direction of the adjustment of the inclination adjustment mechanism are not in agreement, vector conversion or coordinate conversion can be suitably performed.

In addition, the inclination control can be performed for both the X and Y directions, or performed for only one. The detection of the change component of the signal is performed from bright level signals but the amplitude change or the jitter component change in the reproduced signal can alternatively be detected.

The above description of the first through eighth embodiments uses the case where the object optical system is configured from only the objective lens 54 but the description is still the same for the case where the object optical system is configured from a plural number of optical elements. In this case, it is possible to shift either some or all of the elements as long as the same effect is obtained.

In addition, the present invention can be applied to the manufacture of optical pickups and disk drive apparatus but it can also be applied to these apparatus themselves and used to detect the inclination when an optical disk is being driven.

Also, the circuit configuration can be subject to change and variation so as to produce the same effect, and still be within the scope of the present invention.

In addition, when the direction of the detected inclination and the adjustment direction of the inclination adjustment mechanism are not in agreement in the case of the first embodiment, suitable coordinate conversion as for the case of the fourth embodiment can also be performed. In the fourth embodiment, an optical inclination was applied at the rate of one cycle per revolution but the present invention is not limited to this, as the relationship between the speed of rotation and the cycle can be freely changed in accordance with necessity.

## Claims

1. A device for the detection of relative inclination of an optical disk (3, 30, 33, 55) that records information and an optical head (15) that reproduces said information recorded by the irradiation of a light beam to this disk, comprising:
an inclination adjustment means (16) that shifts the relative inclination between said disk and head by applying a forced inclination in alternately positive and negative directions with respect to either of said optical disk (3, 30, 33, 55) and said optical head (15);
a signal change detection means (18) that detects the change of an output signal of an optical head (15) generated when a relative inclination is forcedly changed by said inclination adjustment means (16);
a disk vibration signal generating means (17) which uses the focus drive signal to generate a signal synchronised with the oscillation of the disk (3, 30, 33, 55);
characterised by comprising phase synchronisation detection means (19, 20) that detects the relative inclination between said disk and head on the basis of the cycle of forced inclination detected by said disk vibration signal generating means (17) and the change in signals detected by said signal change detections means (18).

2. The detection device of Claim 1, wherein :
the disk inclination adjustment means (16) comprises a disk inclination adjustment mechanism that forcedly changes an inclination of said disk with respect to said optical head by applying an inclination in alternately positive and negative directions at a constant cycle;
said signal change detection means (18) is arranged to detect a change in the output signal of said optical head (15) generated when an inclination of said disk has been forcedly changed by said change mechanism;
said disk vibration signal generator (17) is arranged to detect a cycle of forced change of an inclination of said disk by said change mechanism; and
said phase sychronisation detection means (19, 20) is arranged to detect an inclination of said disk with respect to said head on the basis of said inclination change cycle and said optical head output signal change.

3. The detection device of Claim 2, wherein:
said phase synchronisation detection-means (19, 20) performs detection of an envelope detect wave with respect to output signals of said optical head (15), and comprising a detect circuit that detects a change of a signal.

4. The detection device of Claim 2, wherein:
said signal change detection means performs detection of a jitter component contained in output signal of said optical head (15), and comprising a detect circuit that detects a change of a signal.

5. The detection device of Claim 2, wherein:
in addition to said disk inclination change mechanism, said inclination adjustment means (16) is further provided with an object lens drive mechanism that drives an object lens (54) configuring said optical head at a rotational cycle of said optical disk and so that a radial change of direction becomes an eccentric direction and a reverse direction of an information track.

6. The detection device of Claim 2, wherein:
said inclination adjustment means (16) is further provided with an object lens drive mechanism so that an aberration component of an object lens (54) comprising said optical head in addition to said disk inclination change mechanism and generated by radial shift at the rotation cycle of said optical disk, is multiplied with the X direction inclination component generated accompanying rotation of an optical disk.

7. The detection device of Claim 1, wherein:
said inclination adjustment means (16) comprises an optical shift means that relatively shifts an objective optical system (54) that irradiates said light beam to said optical disk, from the center (L_{A}) of said light beam to a peripheral region.

8. The detection device of Claim 7, wherein:
said detection device comprises a laser oscillator (50) that generates said light beam, a diffraction grating (51) that diffracts laser light from said laser oscillator (50), a beam splitter (52) that reflects in the direction of an optical disk (55) the diffracted light that passes through said diffraction grating (51), a collimator (53) that makes parallel light beams of the light that is reflected by said beam splitter (52), an objective lens (54) that focuses at a specific point of said disk (55) the parallel light beams passing through said collimator (53), a detection lens (56) that focuses and detects laser light that is reflected by said disk (55) and irradiated via said objective lens (54), said collimator (53) and said beam splitter (52) in order to detect information, a photodetector that detects information recorded on said disk (55) on the basis of light that is focussed by said detection lens (56) and an optical head (15).

9. The detection device of Claim 1, wherein:
said signal change detection means consists of an aberration component detection circuit (18) that receives reproduced signals from said optical head (15) and detects a change component caused by aberration generated due to inclination of an optical disk (3) from said reproduced signals, further comprising a vibration signal generation circuit (17) that receives focus drive signals applied to said optical head (15) and generates vibration signals synchronous with an inclination status of an optical disk (3), and
said phase synchronisation detection means comprises an in-phase synchronous detector (19) and a 90° phase synchronous detector (20) that respectively perform synchronous wave detect for the same phase and a 90° shifted phase on the basis of aberration change component of said reproduced signals output from said aberration component detection circuit (18) and vibration signals generated from amounts of said focus drive signals by said disk vibration signal generation circuit (17).

10. The detection device of Claim 9, wherein:
said in-phase synchronous detector (19) outputs a same phase detected wave component to an X regulation amplifier (21) that performs regulation of the inclination (in the X direction) of an optical disk (3), and that also outputs X direction inclination adjustment commands to an inclination adjustment mechanism (16) via a drive amplifier (23),
said 90° phase synchronous detector (20) outputs a 90° shift phase detected wave component to a Y regulation amplifier (22) that performs adjustment in the direction (the Y direction) perpendicular to said X direction, and
outputs Y direction inclination adjustment commands to said inclination adjustment means (16) via a drive amplifier (24).

11. The detection device of Claim 1, wherein:
said signal change detection means comprises a jitter change component detection circuit (35) that detects a jitter change component of an RF signal, a burst noise suppressor circuit (37) that suppresses burst noise from this detected jitter change component for this jitter change component detection circuit (35), and a change component selector circuit (36) that selectively outputs a jitter change component of said detection circuit (35) by signals that have had noise suppression processing and which have been output from said burst noise suppressor circuit (37).

12. The detection device of Claim 11, wherein:
said phase synchronisation detection means (19,20) comprises a vibration signal generation circuit (38) that receives focus drive signals output from said optical head (15) and generates vibration signals synchronous with an inclination status of an optical disk (3) from amongst these focus drive signals, and
said signal change means comprising a synchronous signal generation circuit (39) and a synchronous signal in 90° shifted phase generation circuit (40) that respectively perform synchronous wave detect at the same phase and the 90° shifted phase, on the basis of vibration signals generated from amongst said focus drive signals by said vibration signal generation circuit (38).

13. The detection device of Claim 12, wherein:
said synchronous signal generation circuit (39) outputs a same phase detect wave component to an X component detection circuit (41) that detects an inclination direction (X direction) component of an optical disk (3), and
said synchronous signal in 90° shifted phase generation circuit (40) detects a component in a direction (the Y direction) perpendicular to said X direction from amongst the 90° phase shifted wave detect component.

14. The detection device of Claim 1, wherein:
said signal change detection means comprises a change component detection circuit (61) that detects a change component from said output signal of said optical head (15), a burst noise suppressor circuit (63) that suppresses noise of a component detected by this circuit (61), and a change component selector circuit (62) that selects a component from said circuit (61) by suppressed noise,
said signal change detection means comprising a synchronous signal generation circuit (64) that generates signals synchronous with drive signals, and
said phase synchronisation detection means comprising an X component detection circuit that detects a component in an inclination direction (X direction) of an optical disk (55) on the basis of the synchronous signal output from said circuit (64) and the output of said change component selection circuit (62).

15. The detection system of Claim 14, wherein:
said phase synchronisation detection means (19, 20) has a low-pass filter (66) and a meter amplifier (67) and an inclination of an optical disk (55) from an X direction component output detected via these is displayed on a meter (68).

## Patentansprüche

1. Vorrichtung zur Feststellung der relativen Neigung einer optischen Platte (3, 30, 33, 55), die Information aufzeichnet, und eines optischen Kopfes (15), der die aufgezeichnete Information durch Aufstrahlung eines Lichtstrahls auf die Platte wiedergibt , aufweisend:
eine Neigungseinstelleinrichtung (16), die die relative Neigung zwischen der Platte und dem Kopf durch Auferlegung einer Zwangsneigung in alternierend positiver und negativer Richtung bezüglich einem von der optischen Platte (3, 30, 33, 55) und dem optischen Kopf (15) verschiebt;
eine Signaländerungs-Detektoreinrichtung (18), die die Änderung eines Ausgangssignals des optischen Kopfes (15) detektiert, die hervorgerufen wird, wenn eine relative Neigung durch die Neigungseinstellvorrichtung (16) zwangsweise geändert ist;
eine Plattenschwingungssignal-Erzeugungseinrichtung (17), die das Fokussteuersignal verwendet, um ein Signal synchronisiert mit der Oszillation der Platte (3, 30, 33, 55) zu erzeugen:
**gekennzeichnet durch**
das Aufweisen einer Phasensynchronisations-Detektoreinrichtung (19, 20), die die relative Neigung zwischen der Platte und dem Kopf auf der Grundlage des Zyklusses erzwungener Neigung, der von der Plattenschwingungssignal-Erzeugungseinrichtung (17) detektiert ist, und der Änderung der Signale detektiert, die von der Signaländerungs-Detektoreinrichtung (18) detektiert worden ist.

2. Feststellvorrichtung nach Anspruch 1, in welcher:
die Plattenneigungseinstelleinrichtung (16) einen Plattenneigungseinstellmechanismus umfaßt, der eine Neigung der Platte bezüglich des optischen Kopfes zwangseise ändert, indem er mit konstantem Zyklus eine Neigung in alternierend positiver und negativer Richtung auferlegt;
die Signaländerungs-Detektoreinrichtung (18) dazu ausgelegt ist, eine Änderung im Ausgangssignal des optischen Kopfes (15) zu detektieren, die hervorgerufen wird, wenn eine Neigung der Platte durch den Änderungsmechanismus zwangsweise geändert worden ist;
die Plattenschwingungssignal-Erzeugungseinrichtung (17) dazu ausgelegt ist, einen Zyklus der erzwungenen Änderung einer Neigung der Platte durch den Änderungsmechanismus zu detektieren; und
die Phasensynchronisations-Detektoreinrichtung (19, 20) dazu ausgelegt ist, eine Neigung der Platte bezüglich des Kopfes auf der Grundlage des Neigungsänderungszyklusses und der Änderung im Ausgangssignal des optischen Kopfes zu detektieren.

3. Feststellungsvorrichtung nach Anspruch 2, in welcher:
die Phasensynchronisations-Detektoreinrichtung (19, 20) die Detektion einer Detektionskurven-Einhüllenden bezüglich der Ausgangssignale des optischen Kopfes (15) ausführt und eine Detektorschalting umfaßt, die eine Änderung eines Signals detektiert.

4. Feststellungsvorrichtung nach Anspruch 2, in welcher:
die Signaländerungs-Detektoreinrichtung eine Detektion einer Jitterkomponente ausführt, die im Ausgangssignal des optischen Kopfes (15) enthalten ist, und eine Detektorschaltung umfaßt, die eine Änderung eines Signals detektiert.

5. Feststellungsvorrichtung nach Anspruch 2, in welcher:
zusätzlich zum Plattenneigungs-Änderungsmechanismus die Neigungseinstelleinrichtung (16) ferner mit einem Objektivlinsen-Antriebsmechanismus versehen ist, der eine Objektivlinse (54), die zur optischen Kopfkonfiguration gehört, mit einem Rotationszyklus der optischen Platte und derart ansteuert, daß eine radiale Richtungsänderung zu einer exzentrischen Richtung und einer Umkehrrichtung einer Informationsspur wird.

6. Feststellungsvorrichtung nach Anspruch 2, in welcher:
die Neigungseinstelleinrichtung (16) ferner zusätzlich zum Plattenneigungsänderungsmechanismus mit einem Objektivlinsen-Antriebsmechanismus versehen ist, so daß eine Aberrationskomponente einer Objektivlinse (54), die den optischen Kopf umfaßt, und die durch eine radiale Verschiebung mit dem Rotationszyklus der optischen Platte hervorgerufen wird, mit der X-Richtungsneigungskomponente multipliziert wird, die von der begleitenden Rotation einer optischen Platte hervorgerufen wird.

7. Feststellungsvorrichtung nach Anspruch 1, in welcher:
die Neigungseinstelleinrichtung (16) eine optische Verschiebungseinrichtung umfaßt, die ein optisches Objektivsystem (54), das den Lichtstrahl auf die optische Platte strahlt, relativ zum Zentrum (L_{A}) des Lichtstrahls zu einer Umfangsregion verschiebt.

8. Feststellungsvorrichtung nach Anspruch 7, in welcher:
die Feststellungsvorrichtung einen Laseroszillator (50) umfaßt, der den Lichtstrahl erzeugt, ein Beugungsgitter (51), welches Laserlicht vom Laseroszillator (50) beugt, einen Strahlteiler (52), der das Beugungslicht, welches durch das Beugungsgitter (51) tritt, in die Richtung einer optischen Platte (55) reflektiert, einen Kollimator (53), der aus dem Licht, das durch den Strahlteiler (52) reflektiert worden ist, parallele Lichtstrahlen herstellt, eine Objektivlinse (54), die die parallelen Lichtstrahlen, die durch den Kollimator (53) treten, auf einen spezifischen Punkt der Platte (55) fokussiert, eine Detektionslinse (56), die Laserlicht, das von der Platte (55) reflektiert worden ist und über die Objektivlinse (54), den Kollimator (53) und den Strahlteiler (52) aufgestrahlt werden ist, fokussiert und detektiert, um Information zu detektieren, einen Photodetektor, der die auf der Platte (55) aufgezeichnete Information auf der Grundlage von Licht detektiert, das durch die Detektionslinse (56) fokussiert ist, und einen optischen Kopf (15).

9. Feststellungsvorrichtung nach Anspruch 1, in welcher:
die Signaländerungs-Detektoreinrichtung aus einer Aberrationskomponenten-Detektorschaltung (18) besteht, die wiedergegebene Signale vom optischen Kopf (15) empfängt und eine Änderungskomponente, welche durch eine Aberration bewirkt wird, die infolge der Neigung der optischen Platte (3) hervorgerufen wird, aus den wiedergegebenen Signalen detektiert, ferner aufweisend eine Schwingungssignal-Erzeugungsschaltung (17), die Fokussteuersignale empfängt, die dem optischen Kopf (15) zugeführt werden, und Schwingungssignale synchron mit einem Neigungszustand einer optischen Platte (3) erzeugt, und
die Phasensynchronisations-Detektoreinrichtung einen Inphase-Synchrondetektor (19) und einen 90° phasensynchronen Detektor (20) umfaßt, die jeweils eine Synchronwellendetektion für dieselbe Phase und eine um 90° verschobene Phase auf der Grundlage einer Aberrationsänderungskomponente der wiedergegebenen Signale ausführen, die von der Aberrationskomponenten-Detektorschaltung (18) ausgegeben werden, und auf der Grundlage von Schwingungssignalen, die durch die Plattenschwingungssignal-Erzeugungsschaltung (17) aus Beträgen der Fokussteuersignale erzeugt werden.

10. Feststellungsvorrichtung nach Anspruch 9, in welcher:
der Inphasesynchrondetektor (19) eine detektierte Wellenkomponente gleicher Phase zu einem X-Regelverstärker (21) ausgibt, der eine Regulierung der Neigung (in der X-Richtung ) einer optischen Platte (3) ausführt, und auch Befehle für eine X-Richtungs-Neigungseinstellung an einen Neigungseinstellmechanismus (16) über einen Steuerverstärker (23) ausgibt,
der 90°-Phasensynchrondetektor (20) eine detektierte Wellenkomponente mit 90° Phasenverschiebung zu einem Y-Regelverstärker (22) ausgibt, der eine Einstellung in der Richtung (der Y-Richtung) senkrecht zur X-Richtung ausführt,
Befehle zur Y-Richtungs-Neigungseinstellung an die Neigungseinstelleinrichtung (16) über einen Steuerverstärker (24) ausgibt.

11. Feststellungsvorrichtung nach Anspruch 1, in welcher:
die Signaländerungsdetektoreinrichtung eine Jitteränderungskomponenten-Detektorschaltung (35) umfaßt, die eine Jitteränderungskomponente eines HF-Signals detektiert, ferner eine Burstrausch-Unterdrückungsschaltung (37), die Burstrauschen von dieser detektierten Jitteränderungskomponente für diese Jitteränderungskomponenten-Detektorschaltung (35) unterdrückt, und eine Änderungskomponenten-Selektorschaltung (36), die selektiv eine Jitteränderungskomponente der Detektionsschaltung (35) über Signale ausgibt, die einer Rauschunterdrückungsverarbeitung unterzogen sind und die von der Burstrauschen-Unterdrückungsschaltung (37) ausgegeben worden sind.

12. Feststellungsvorrichtung nach Anspruch 11, in welcher:
die Phasensynchronisations-Detektoreinrichtung (19, 20) eine Schwingungssignalerzeugungsschaltung (38) umfaßt, die Fokussteuersignale empfängt, die vom optischen Kopf (15) ausgegeben werden, und die Schwingungssignale synchron mit einem Neigungszustand einer optischen Platte (3) aus diesen Fokussteuersignalen erzeugt, und
die Signaländerungseinrichtung eine Synchronsignalerzeugungsschaltung (39) und eine Erzeugungsschaltung (40) für ein Synchronsignal mit 90° verschobener Phase umfaßt, die jeweils eine Synchronwellendetektion mit derselben Phase und der um 90° verschobenen Phase auf der Grundlage von Schwingungssignalen ausführen, die aus den Fokussteuersignalen durch die Schwingungssignalerzeugungsschaltung (38) erzeugt worden sind.

13. Feststellungsvorrichtung nach Anspruch 12, in welcher:
die Synchronsignalerzeugungsschaltung (39) eine Detektionswellenkomponente gleicher Phase an eine X-Komponentendetektionsschaltung (41) ausgibt, die eine Neigungsrichtungs-(X-Richtungs)-Komponente einer optischen Platte (3) detektiert, und
die Erzeugungsschaltung (40) für ein Synchronsignal mit 90° verschobener Phase eine Komponente in eine Richtung (der Y-Richtung) senkrecht zur X-Richtung aus den um 90° verschobenen Detektionswellenkomponenten detektiert.

14. Feststellungsvorrichtung nach Anspruch 1, in welcher:
die Signaländerungsdetektoreinrichtung eine Änderungskomponenten-Detektorschaltung (61) umfaßt, die eine Änderungskomponente aus dem Ausgangssignal des optischen Kopfes (15) detektiert, eine Burstrauschen-Unterdrückungsschaltung (63), die Rauschen einer Komponente, die von dieser Schaltung (61) detektiert worden ist, unterdrückt, und eine Änderungskomponenten-Selektorschaltung (62), die eine Komponente von dieser Schaltung (61) durch unterdrücktes Rauschen selektiert,
die Signaländerungsdetektoreinrichtung eine Synchronsignalerzeugungsschaltung (64) umfaßt, die Signale synchron mit Steuersignalen erzeugt, und
die Phasensynchronisations-Detektoreinrichtung eine X-Komponentendetektorschaltung umfaßt, die eine Komponente in einer Neigungsrichtung (X-Richtung) der optischen Platte (55) auf der Grundlage der Synchronsignalausgabe von der Schaltung (64) und des Ausgangssignals der Änderungskomponentenselektorschaltung (62) detektiert.

15. Feststellungsvorrichtung nach Anspruch 14, in welcher:
die Phasensynchronisations-Detektoreinrichtung (19, 20) ein Tiefpaßfilter (66) und einen Meßverstärker (67) umfaßt, und in welcher die Neigung einer optischen Platte (55) von einem X-Richtungskomponenten-Ausgangssignal, das durch diese detektiert worden ist, auf einem Meßgerät (68) dargestellt wird.

## Revendications

1. Dispositif pour la détection de l'inclinaison relative d'un disque optique (3, 30, 33, 55) qui enregistre des informations, et d'une tête optique (15) qui reproduit lesdites informations enregistrées par l'irradiation d'un faisceau lumineux sur ce disque, comprenant:
un moyen de réglage d'inclinaison (16) qui fait varier l'inclinaison relative entre lesdits disque et tête, en appliquant une inclinaison forcée dans des directions alternativement positive et négative par rapport soit audit disque optique (3, 30, 33, 55), soit à ladite tête optique (15);
un moyen de détection de variation de signal (18), qui détecte la variation d'un signal de sortie d'une tête optique (15), généré lorsqu'une inclinaison relative est modifiée de façon forcée par ledit moyen de modification d'inclinaison (16);
un moyen de génération de signal de vibration de disque (17), qui utilise le signal de commande de concentration pour générer un signal synchronisé avec l'oscillation du disque (3, 30, 33, 55);
caractérisé par le fait qu'il comprend un moyen de détection de synchronisation de phase (19, 20) qui détecte l'inclinaison relative entre lesdits disque et tête, sur la base du cycle d'inclinaison forcée détectée par ledit moyen de génération de signal de vibration de disque (17), et de la variation des signaux détectés par ledit moyen de détection de variation de signal (18).

2. Dispositif de détection selon la revendication 1, dans lequel:
le moyen de réglage d'inclinaison (16) comprend un mécanisme de réglage d'inclinaison de disque qui fait varier par force l'inclinaison dudit disque par rapport à ladite tête optique, en appliquant une inclinaison alternativement dans les directions positive et négative, selon un cycle constant;
ledit moyen de détection de variation de signal (18) est aménagé de façon à détecter une variation du signal de sortie de ladite tête optique (15), généré lorsque l'inclinaison dudit disque a été modifiée de façon forcée par ledit mécanisme de variation;
ledit générateur de signal de vibration de disque (17) est aménagé de façon à détecter un cycle de variation forcée d'une inclinaison dudit disque par ledit mécanisme de variation; et
ledit moyen de détection de synchronisation de phase (19, 20) est aménagé de façon à détecter une inclinaison dudit disque par rapport à ladite tête, sur la base dudit cycle de variation d'inclinaison et de ladite variation du signal de sortie de la tête optique.

3. Dispositif de détection selon la revendication 2, dans lequel:
ledit moyen de détection de synchronisation de phase (19, 20) effectue la détection d'une onde de détection d'enveloppe par rapport aux signaux de sortie de ladite tête optique (15), et comprenant un circuit de détection qui détecte une variation d'un signal.

4. Dispositif de détection selon la revendication 2, dans lequel:
ledit moyen de détection de variation de signal effectue la détection d'une composante de gigue contenue dans le signal de sortie de ladite tête optique (15), et comprenant un circuit de détection qui détecte une variation d'un signal.

5. Dispositif de détection selon la revendication 2, dans lequel:
outre ledit mécanisme de variation d'inclinaison du disque, ledit moyen de réglage d'inclinaison (16) est pourvu en outre d'un mécanisme de commande de lentille objet, qui commande une lentille objet (54) configurant ladite tête optique selon un cycle rotationnel dudit disque optique, et de façon qu'une variation radiale de direction devienne une direction excentrée et une direction inverse d'une piste d'informations.

6. Dispositif de détection selon la revendication 2, dans lequel:
ledit moyen de variation d'inclinaison (16) est pourvu en outre d'un mécanisme de commande de lentille objet tel qu'une composante d'aberration d'une lentille objet (54) comprenant ladite tête optique, outre ledit mécanisme de variation d'inclinaison du disque, et générée par le décalage radial au cycle de rotation dudit disque optique, est multiplié par la composante d'inclinaison de direction X accompagnant la rotation d'un disque optique.

7. Dispositif de détection selon la revendication 1, dans lequel:
ledit moyen de variation d'inclinaison (16) comprend un moyen de déplacement optique qui déplace relativement un système optique d'objectif (54) qui irradie ledit faisceau lumineux vers ledit disque optique, depuis le centre (L_{A}) dudit faisceau lumineux vers une zone périphérique.

8. Dispositif de détection selon la revendication 7, dans lequel:
ledit dispositif de détection comprend un oscillateur à laser (50), qui génère ledit faisceau lumineux, une grille de diffraction (51) qui diffracte la lumière laser provenant dudit oscillateur à laser (50), un séparateur de faisceau (52), qui réfléchit dans la direction d'un disque optique (55) la lumière diffractée qui traverse ladite grille de diffraction (51), un collimateur (53), qui constitue des faisceaux lumineux parallèles de la lumière qui est réfléchie par ledit séparateur de faisceau (52), une lentille d'objectif (54), qui concentre en un point spécifique dudit disque (55) les faisceaux lumineux parallèles traversant ledit collimateur (53), une lentille de détection (56), qui concentre et détecte la lumière laser qui est réfléchie par ledit disque (55), et irradiée par l'intermédiaire de ladite lentille d'objectif (54), ledit collimateur (53) et ledit séparateur de faisceau (52), afin de détecter des informations, un photodétecteur qui détecte les informations enregistrées sur ledit disque (55), sur la base de la lumière qui est concentrée par ladite lentille de détection (56) et une tête optique (15).

9. Dispositif de détection selon la revendication 1, dans lequel:
ledit moyen de détection de variation de signal est constitué d'un circuit de détection de composante d'aberration (18), qui reçoit des signaux reproduits depuis la tête optique (15), et détecte une composante de variation provoquée par l'aberration générée en raison de l'inclinaison d'un disque optique (3) desdits signaux reproduits, comprenant en outre un circuit de génération de signaux de vibration (17), qui reçoit des signaux de commande de concentration appliqués à ladite tête optique (15), et génère des signaux d'oscillation synchronisés avec un état d'inclinaison d'un disque optique (3), et
ledit moyen de détection de synchronisation de phase comprend un détecteur synchrone en phase (19) et un détecteur synchrone déphasé de 90° (20), qui effectuent respectivement une détection d'onde synchrone pour la même phase et pour une phase déplacée de 90°, sur la base de la composante de variation d'aberration desdits signaux reproduits délivrés en sortie par ledit circuit de détection de composante d'aberration (18), et les signaux de vibration générés d'après les valeurs desdits signaux de commande de concentration par ledit circuit de génération de signaux de vibration de disque (17).

10. Dispositif de détection selon la revendication 9, dans lequel:
ledit détecteur synchrone en phase (19) délivre en sortie une composante d'onde détectée de même phase à un amplificateur de régulation en X (21) qui effectue la régulation de l'inclinaison (dans la direction X) d'un disque optique (3), et qui délivre également en sortie des commandes de réglage d'inclinaison dans la direction X à un mécanisme de réglage d'inclinaison (16) par l'intermédiaire d'un amplificateur de commande (23),
ledit détecteur synchrone déphasé de 90° (20) délivre en sortie une composante d'onde détectée déphasée de 90° à un amplificateur de régulation en Y (22) qui effectue le réglage dans la direction perpendiculaire (direction Y) à ladite direction X, et
délivre en sortie des commandes de réglage d'inclinaison dans la direction Y vers ledit moyen de réglage d'inclinaison (16) par l'intermédiaire d'un amplificateur de commande (24).

11. Dispositif de détection selon la revendication 1, dans lequel:
ledit moyen de détection de variation de signal comprend un circuit de détection de composante de variation de gigue (35), qui détecte une composante de variation de gigue d'un signal RF, un circuit suppresseur de bruit de rafale (37), qui supprime le bruit de rafale provenant de cette composante de variation de gigue pour ce circuit de détection de composante de variation de gigue (35), et un circuit sélecteur de composante de variation (36), qui délivre en sortie de façon sélective une composante de variation de gigue provenant dudit circuit de détection (35) par des signaux qui ont subi un traitement de suppression de bruit, et qui ont été délivrés en sortie par ledit circuit suppresseur de bruit de rafale (37).

12. Dispositif de détection selon la revendication 11, dans lequel:
ledit moyen de détection de synchronisation de phase (19, 20) comprend un circuit de génération de signal de vibration (38), qui reçoit des signaux de commande de concentration délivrés en sortie par ladite tête optique (15), et qui génère des signaux de vibration synchronisés avec un état d'inclinaison d'un disque optique (3), d'après ces signaux de commande de concentration, et
ledit moyen de variation de signal comprenant un circuit de génération de signal synchrone (39) et un circuit de génération de signal synchrone déphasé de 90° (40), qui effectuent respectivement une détection d'onde synchrone avec la même phase et avec un déphasage de 90°, sur la base des signaux d'oscillation générés, d'après lesdits signaux de commande de concentration par ledit circuit de génération de signal d'oscillation (38).

13. Dispositif de détection selon la revendication 12, dans lequel:
ledit circuit de génération de signal synchrone (39) délivre en sortie une composante d'onde de détection de même phase à un circuit de détection de composante X (41) qui détecte une composante de direction d'inclinaison (direction X) d'un disque optique (3), et
ledit circuit de génération de signal synchrone déphasé de 90° (40) détecte une composante dans une direction (direction Y) perpendiculaire à ladite direction X, d'après la composante de détection d'onde déphasée de 90°.

14. Dispositif de détection selon la revendication 1, dans lequel:
ledit moyen de détection de variation de signal comprend un circuit de détection de composante de variation (61), qui détecte une composante de variation provenant dudit signal de sortie de ladite tête optique (15), un circuit suppresseur de bruit de rafale (63) qui supprime le bruit d'une composante détectée par ce circuit (61), et un circuit sélecteur de composante de variation (62), qui sélectionne une composante dudit circuit (61) par bruit supprimé,
ledit moyen de détection de variation de signal comprenant un circuit de génération de signal synchrone (64), qui génère des signaux synchrones avec les signaux de commande, et
ledit moyen de détection de synchronisation en phase comprenant un circuit de détection de composante X, qui détecte une composante dans une direction d'inclinaison (direction X) d'un disque optique (55), sur la base du signal synchrone délivré en sortie par ledit circuit (64) et de la sortie dudit circuit de sélection de composante de variation (62).

15. Dispositif de détection selon la revendication 14, dans lequel:
ledit moyen de détection de synchronisation de phase (19, 20) comporte un filtre passe bas (66) et un amplificateur de mesure (67), et une inclinaison d'un disque optique (55) depuis une sortie de composante de direction X détectée par l'intermédiaire de ceux-ci est affichée sur un appareil de mesure (68).
